(19) Europäisches Patentamt
European Patent Office
Office européen des brevets

(11) **EP 4 668 482 A1**

(12) **EUROPEAN PATENT APPLICATION**

(43) Date of publication:
**24.12.2025 Bulletin 2025/52**

(21) Application number: **24425036.1**

(22) Date of filing: **20.06.2024**

(51) International Patent Classification (IPC):
*H01Q 1/52* (2006.01)   *H01Q 15/14* (2006.01)
*H05K 9/00* (2006.01)   *G01S 7/41* (2006.01)
*G01S 13/06* (2006.01)   *G01S 13/931* (2020.01)

(52) Cooperative Patent Classification (CPC):
**G01S 7/414; G01S 13/06; G01S 13/931;
H01Q 1/526; H01Q 15/14; H01Q 15/18; H05K 9/00;**
G01S 2013/9328

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Progress Rail Signaling S.p.A.
51034 Serravalle Pistoiese (Pistoia) (IT)**

(72) Inventors:
• **Agostini, Alessandro
50134 Firenze (IT)**
• **Albani, Matteo
50126 Firenze (IT)**

(74) Representative: **Finch, Steven Caffall
Novagraaf UK
1st Floor
77 Gracechurch Street
London EC3V 0AS (GB)**

(54) **METHOD AND APPARATUS FOR SHIELDING A FIXED OBSTRUCTION IN A RADAR INSTALLATION**

(57)    A shield (110, 210, 310, 410) is provided with a reflective surface (11) substantially without three-dimensional pattern and oriented to extend away from the radar antenna (3) from a near edge (12) to a far edge (13). Each of the near edge (12) and the far edge (13) includes at least two contiguous, straight portions (14) defining at least one vertex (15) at a point of mutual intersection. The shield is arranged to shield an obstruction (2) in the field of view of the radar and may be used to reduce clutter in a fixed radar installation (1), for example, on a railway level crossing.

FIG. 7

EP 4 668 482 A1

**Description**

Technical Field

This disclosure relates to arrangements for reducing clutter caused by permanent obstructions in the field of view of a radar.

Background

A radar means an apparatus that emits a wave (which is to say, a directed group of electromagnetic waves) along a wave axis or line of incidence i (the straight line along which the wave or group of waves travels) from an antenna over a field of view, receives the same wave reflected back from target objects in the field of view, conveniently (although not necessarily) via the same antenna, to produce a signal, and processes the signal to indicate or identify changes in the signal that represent changes in the presence or position of the target objects in the field of view.

The near field of a radar is the region near the antenna where complex interference patterns are formed by the emitted waves, making it impractical to detect targets located in the near field close to the antenna. These interference patterns diminish rapidly with increasing distance from the antenna and are substantially absent in the far field, which can be thought of as the region of the wave far enough away from the antenna along the wave axis to allow effective target detection.

The far field can be defined as the region beyond the Fraunhofer distance $2Da\ (Da/\lambda)$, where Da is the largest dimension of the antenna, e.g. the diameter of the reflector or dish of the antenna, and $\lambda$ is the wavelength of the emitted waves. However, when the largest dimension of the antenna is at least about 25 times the wavelength ($Da \geq 25\lambda$), there is a smooth transition from near to far field conditions, so that detection is possible from about one third of the Fraunhofer distance $(1/3\ (2Da\ (Da/\lambda))$.

High frequency radars are often used in short range installations to monitor a fixed area, for example, a level crossing on a railway, so that objects moving into the protected area will enter the far field of the wave. The wave is reflected from the object back to the radar which detects the reflected wave. By monitoring and processing changes in the signal representing the reflected wave, the radar can be arranged to identify a change that represents an object entering the fixed area, and to initiate an appropriate response, for example, to warn the driver of an oncoming train that there is an obstruction on the track.

Unwanted signals generated by reflection or diffraction of the wave from surfaces other than the target objects in the far field of the wave are referred to as clutter.

Where a radar is arranged to monitor a fixed area, clutter will include reflections from objects that are permanently within the far field of the wave emitted by the radar antenna. For example, a substantial target such as fixed metal cabinet located near the level crossing will produce a large reflected signal, which makes it more difficult to detect the change in the signal that represents an object that has moved onto the crossing.

For more reliable detection of moving objects, it is therefore desirable to reduce clutter from fixed obstructions as far as possible. This can be done by arranging a shield to mask the obstruction so that it does not reflect the wave back to the radar.

A ray that travels from an emitter to a reflective surface will be reflected from the surface at a predictable angle. Thus, the surface can be oriented to direct all reflected rays away from the emitter. However, rays that strike an edge of the surface will be diffracted to form a family of divergent waves, at least some of which can be expected to return to the emitter, irrespective of the orientation of the surface. For this reason, a flat reflective surface whose edges lie in the path of a radar wave will produce an image by diffraction of the rays incident on its edges, irrespective of the orientation of the surface.

In consequence, simple reflectors are generally not used as shields to mask obstructions. Instead, shields are conventionally formed from nonreflective materials with complex three-dimensional surfaces, generally forming an array of conical or pyramidal structures; for example, as illustrated in Fig. 25, or as taught by US6943286B1 or CN218228193U.

Commonly, shields of this type will be formed as panels of radiofrequency absorbing material such as a filled rubber with a periodic conical surface. The shielding effectiveness depends on the material of the panel, the three-dimensional pattern of its surface, and the orientation of the panel relative to the wave axis. Such shields can suppress clutter in frequency ranges from 5GHz up to 20GHz or more if correctly oriented, and are used to screen objects in the field of view of fixed antenna radar installations, for example, in the vicinity of railway level crossings.

In radar installations that work at very short range, for example, within about 50m of the antenna, and at high frequencies, such as 50 GHz or more, it is found that the effectiveness of such shields will be highly sensitive to very small deformations of the panel and to very small changes in its orientation relative to the wave axis. In consequence, as the panel ages over time, the shielded obstruction can re-appear in the signal detected by the radar. The three-dimensional pattern of the surface can also limit applications of the panel, particularly in outdoor positions where it can accumulate debris.

A radar antenna will often include a reflector, typically a parabolic reflector also referred to as the dish, and a feed antenna or horn that sends the wave to the reflector. Some antennas include both primary and secondary reflectors. The primary reflector or dish directs the wave along the wave axis to the far field, which is to say, the field of view that is monitored by the radar.

Since the field of view is often far distant from the antenna, radar systems are often designed and tested using a compact antenna test range, commonly referred to simply as a compact range.

A compact range includes an antenna located within an anechoic chamber and specially designed to produce a so-called quiet zone within the chamber. The quiet zone replicates far field wave conditions at a much shorter distance from the antenna that would be possible under normal operating conditions. This makes it possible to test and develop the radar using a target located within the anechoic chamber at a short distance from the antenna, obviating the need to test the radar over its true range in field conditions which is often impractical.

In order to produce the quiet zone within the anechoic chamber of a compact range, it is well known to incorporate in the antenna a rolled or serrated edge parabolic reflector. The rolled or serrated edge of the parabolic reflector is used to suppress diffraction effects in the near field of the wave, which otherwise would propagate into the quiet zone.

US6339393 B1 discusses the relative merits of rolled edge versus serrated edge compact range reflectors.

Serrated edge compact range reflectors are discussed in:

GUIDELINES FOR THE DESIGN OF THE SERRATIONS OF A COMPACT RANGE, Knud Pontoppidan and Per H. Nielsen, TICRA, Kronprinsensgade 13, DK-1114 Copenhagen K, Denmark - available online at https://www.ieice.org/~isap/ISAP_Archives/2000/pdf/1B4-5.pdf

Performance Trade-off Between Serrated Edge and Blended Rolled Edge Compact Range Reflectors, Teh-Hong Lee and Walter D. Burnside, IEEE TRANSACTIONS ON ANTENNAS AND PROPAGATION, VOL. 44, NO. 1, JANUARY 1996 - available online at https://ieeexplore.ieee.org/document/477532

Summary of the Disclosure

In a first aspect, the present disclosure provides a shield for use in a radar installation to shield an obstruction.

In related aspects, the disclosure provides a radar installation including the shield, and a method of shielding an obstruction in a radar installation by means of the shield.

The radar installation includes a radar apparatus having at least one antenna with a maximum dimension Da and arranged to emit and receive a wave with a wavelength $\lambda$.

The shield includes a reflective surface for reflecting the wave travelling along a line of incidence from the antenna to a point of incidence on the reflective surface.

The reflective surface is substantially without three-dimensional pattern and has a near edge and a far edge.

In the use position, the shield is arranged between the antenna and the obstruction, and the reflective surface is oriented to extend away from the antenna in a direction of the line of incidence, from the near edge to the far edge, to reflect the wave travelling along the line of incidence away from the antenna.

Each of the near edge and the far edge includes at least two contiguous, straight portions defining at least one vertex, wherein each straight portion defines a respective said vertex at a point of intersection with an adjacent straight portion.

Brief Description of the Drawings

Further features and advantages will be evident from the illustrative embodiments which will now be described, purely by way of example and without limitation to the scope of the claims, and with reference to the accompanying drawings, in which:

Fig. 1 shows a fixed radar installation for monitoring a level crossing on a railway line, including a pair of antennas and a pair of shields. Each shield is oriented in a vertical plane (so the inclination angle $\Phi = 0°$) and at an oblique azimuth angle $\theta$ to reflect the waves emitted from the respective antenna away from a fixed obstruction in the field of view.

Fig. 2 shows the radar apparatus.

Fig. 3 shows one of the shields of Fig. 1 in end view.

Figs. 4 and 5 show the same end view as Fig. 3, illustrating how the inclination angle $\Phi$ changes when the shield is inclined, respectively, in opposite directions away from the vertical orientation of Figs. 1 and 3.

Fig. 6 shows a simple shield formed as a rectangular plate, illustrating the parameters used in calculating the radar cross section RCS of the shield.

Fig. 7 shows a first shield in accordance with an embodiment of the disclosure, in front and end view.

Fig. 8 shows a second shield in accordance with another embodiment, in front and end view.

Fig. 9 shows a third shield in accordance with another embodiment, in front view only.

Fig. 10 shows a fourth shield in accordance with another embodiment, in front view only.

Fig. 11 illustrates the spherical coordinate system as referred to in this specification.

Figs. 12 and 13 are perspective views of the first shield of Fig. 7, illustrating the orientation of the shield about the Z axis by reference to the lateral edge angle of orientation Aoe (Fig. 12) and the vertex angle of orientation Aov (Fig. 13), respectively.

Fig. 14 is a plot of the radar cross section (RCS) of the simple shield of Fig. 6. The plot shows how the RCS varies as the shield is rotated in azimuth and orientation, represented by the parameter space u, v as explained below.

Fig. 15 is a plot corresponding to Fig. 14, representing the RCS of the fourth shield 410 of Fig. 10.

Fig. 16 is a plot corresponding to Fig. 14, representing the RCS of the first shield 110 of Fig. 7.

Fig. 17 is a plot corresponding to Fig. 14, representing the RCS of the second shield 210 of Fig. 8.

Fig. 18 is a plot corresponding to Fig. 14, representing the RCS of the third shield 310 of Fig. 9.

Fig. 19 shows how the RCS of the simple shield of Fig. 6, and the fourth shield 410 of Fig. 10, varies with azimuth angle $\theta$ for the upright orientation where $\Phi = 0°$.

Fig. 20 shows how the RCS of the simple shield of Fig. 6, and of the first, second and third shields 110, 210, 310 of Figs. 7, 8 and 9, varies with azimuth angle $\theta$ for the upright orientation where $\Phi = 0°$.

Figs. 21 and 22 provide an intuitive representation of how the orientation of the shield maps onto the parameter space of the graphs of Figs. 14 - 18.

Figs. 23 and 24 illustrate methods in accordance with embodiments of the dislosure.

Fig. 25 shows part of a conventional periodic radioabsorbent shield.

Figs. 26 - 34 show how the radar cross section (RCS) of the fourth shield 410 of Fig. 10 varies with the azimuth angle $\theta$ and inclination angle $\Phi$, compared with that of the conventional periodic (three-dimensional) radiation absorbent shield of Fig. 25, and the simple shield of Fig. 6.

Reference numerals and characters that appear in more than one of the figures indicate the same or corresponding elements in each of them.

Detailed Description

Those skilled in the art will be familiar with three different theoretical models or paradigms which provide alternative and complementary approaches to the understanding of optical systems. These are: electromagnetism, which is the most rigorous model; physical optics, also referred to as wave optics, which provides a more practical approach when designing an optical system, based on certain simplifying assumptions; and geometrical optics, also referred to as ray optics, which is the simplest approach and is based on the concept of light as a ray.

For convenience and practicality, it is helpful to apply the physical optics model when designing and installing the shield in fixed radar scenarios and other applications. For ease of installation in the field, it is still more helpful to design the shield so that it can be oriented by reference to the widely understood principles of geometrical optics.

Preferably therefore, as further discussed below, certain parameter values are selected to ensure that the shield will perform as expected when designed and installed in accordance with these simplified models.

In this specification, the line of incidence i means a straight line along which the wave travels from the antenna 3 of the radar to a point of incidence i,Z on the reflective surface. The line of incidence i might be referred to instead as a ray, following the terminology of geometrical optics; or as the axis of the wave, or the axis of a beam, where the beam is a series of waves emitted by the radar.

Note that characters that are not italicised in the description appear in italics in the formulae; this is not significant.

The installation

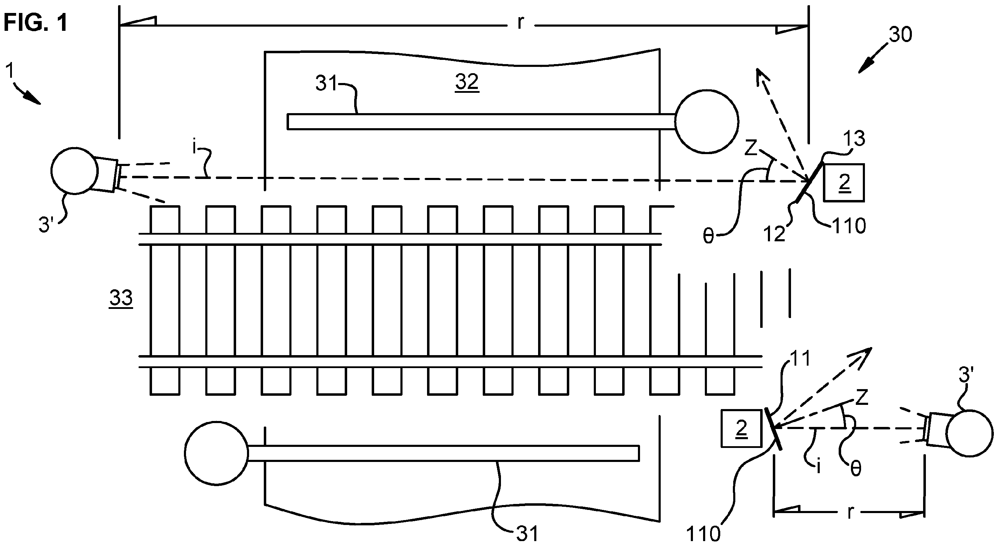

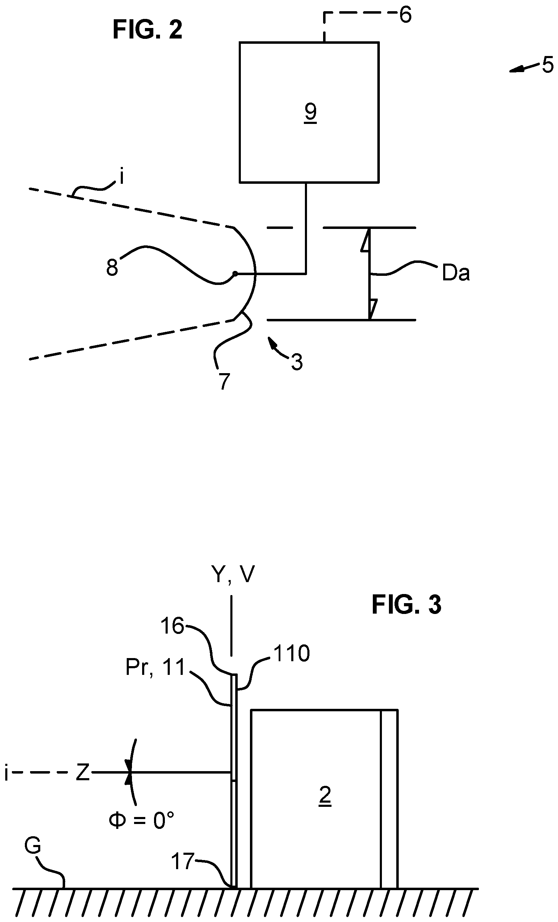

Referring to Figs. 1 and 2, a radar installation 1 includes a radar apparatus 5 having at least one antenna 3 with a maximum dimension Da and arranged to emit and receive a wave with a wavelength $\lambda$. The emitted wave travels along a line of incidence i from the antenna 3 to a point of incidence i,Z on the reflective surface of the shield. The term "maximum dimension" Da is used herein in the sense as well understood in the art, being the maximum dimension of the radiating element.

The at least one antenna 3 may include or consist of a combined transmitting/receiving antenna that both emits (transmits) the wave to the far field and receives the reflected wave from the target, or may include a transmitting antenna for sending the wave and another, receiving antenna for receiving the reflected wave from the target. The at least one antenna may include more than one combined transmitting/receiving antenna (as shown), or more than one transmitting antenna and more than one receiving antenna.

As illustrated, the or each antenna 3 may include a reflector or dish 7 (e.g. a parabolic reflector or any other desired shape) that directs the wave along the line of incidence i to the far field, and a feed antenna or horn 8 that sends the wave to the reflector 7.

If the same antenna 3 is used to receive the reflected signal travelling back along the line of incidence i from the target, then the reflected signal from the target is reflected again from the reflector 7 of the antenna onto the feed antenna 8, which directs the resulting signal to the detecting and processing circuitry 9. In more complex arrangements the antenna may include more than one feed antenna, and/or more than one reflector - for example, a primary reflector and a secondary reflector, the secondary reflector being arranged to reflect the wave between the primary reflector and the feed antenna.

The radar may transmit the wave along the line of incidence i as a continuous or pulsed wave. The wave may be transmitted at a constant frequency, or at a modulated frequency, in which case the wavelength $\lambda$ is taken to be the the carrier frequency of the signal.

The radar apparatus 5 includes signal (wave) generating, detecting and processing circuitry 9 for generating the signal that produces the wave and for detecting and processing the received signal, which is to say, the signal produced by the wave that is received after being reflected back from the target in the field of view. The reflected wave can be received by the same antenna 3 as illustrated, or the wave can be sent and received by different antennas.

As illustrated, the or each antenna 3 may be fixed to define a fixed field of view. The radar apparatus 5 may be arranged to generate an output signal 6 responsive to detecting a target entering the field of view.

In the illustrated example, the radar apparatus 5 is arranged to emit the wave along a horizontal line of incidence i (hence, in a horizontal plane) to monitor a railway level crossing 30 in the field of view of two antennas 3 that cover the crossing from opposite directions. Each antenna 3 is located in protective radome 3'. The crossing 30 has automatic barriers 31 that close the road 32 to protect the railway line 33 when a train is approaching. The output signal 6 could be arranged, for example to control signalling equipment of the railway or otherwise to send a warning (e.g. to the driver of an oncoming train) that a target (e.g. a vehicle or pedestrian) has moved onto the track.

The radar 5 may have a frequency of about 75GHz (for example, 75GHz or 76.5GHz), hence a wavelength $\lambda$ of about 4mm over a maximum range of about 50m. The maximum dimension Da of the or each antenna 3 may be a width or diameter of the dish or reflector 7, and for this wavelength may be about 100mm. Thus, for the illustrated example the Fraunhofer distance ($2Da (Da/\lambda)$) is 5m. Since the antenna 3 is large relative to the wavelength ($Da \geq 25\lambda$), the transition from near field to far field is very smooth, and the radar can detect objects moving into its field of view as close as 2m or even less from the antenna 3. The radar also detects objects beyond the Fraunhofer distance, and conveniently may be arranged so that the level crossing 30 lies within the far field of the wave along the line of incidence i.

As illustrated, a fixed obstruction 2 such as a metal cabinet is present in the field of view of each of the two antennas, which if not screened from the radar will reflect the wave and send back a strong signal to the antenna. The unwanted signal represents clutter and makes it more difficult to detect a target object moving onto the crossing 30. A shield 110 is arranged between each antenna 3 and the obstruction 2 so as to suppress the unwanted signal. In the illustrated example there are two antennas 3, each having an obstruction 2 in its field of view, and so two shields 110 are used, one for each antenna.

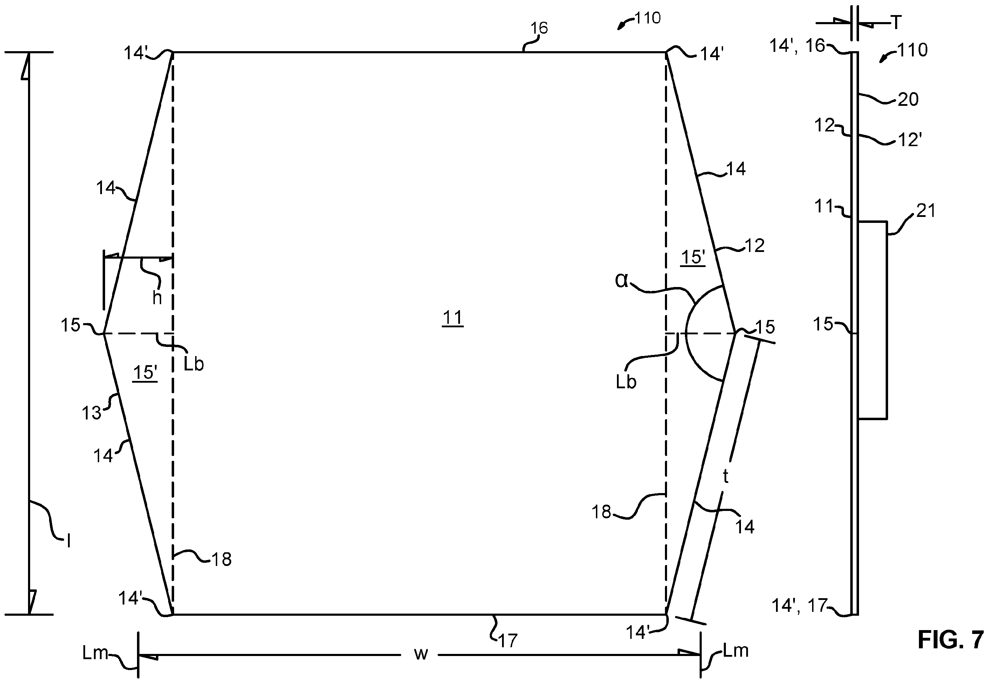

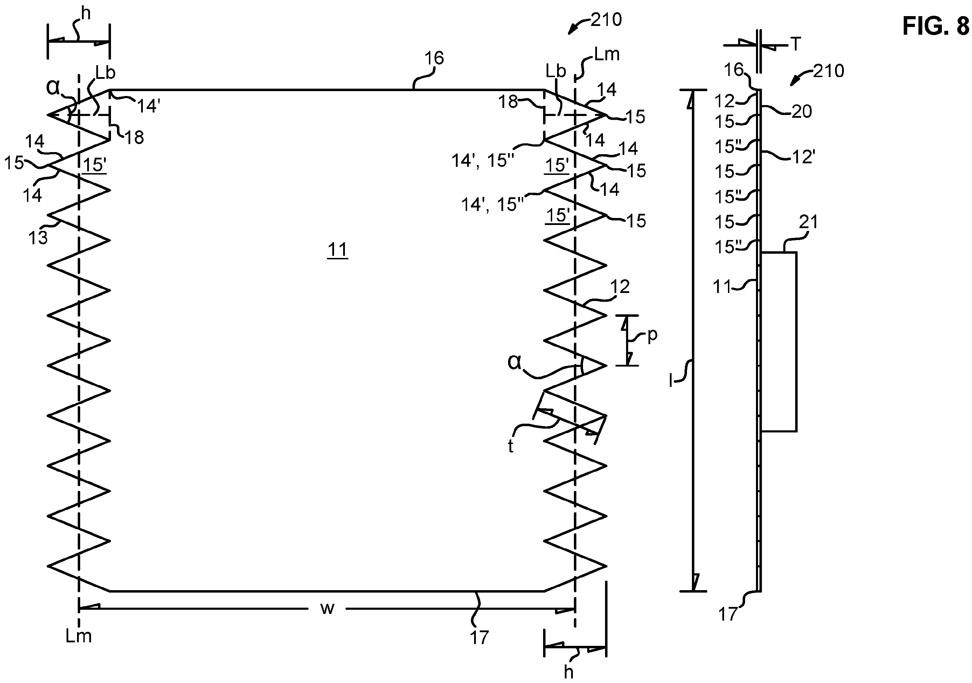

The shield 110 is shown in more detail in Fig. 7, and is referred to herein as the first shield. It may be substituted by any of the second, third and fourth shields 210, 310, 410 as shown in Figs. 8, 9 and 10, as further discussed below.

The or each shield includes a reflective surface 11, which is to say, a surface that is capable of reflecting the wave from the antenna 3.

The or each shield is arranged between the respective antenna 3 and the obstruction 2 and oriented so that its reflective surface 11 extends away from the antenna 3 in a direction of the line of incidence i, from the near edge 12 to the far edge 13 of the reflective surface.

The orientation of the shield 110, 210, 310, 410 in rotation about a vertical axis V, relative to the line of incidence i, defines an azimuth angle $\theta$, as further discussed below. The azimuth angle $\theta$ is selected to reflect the wave travelling along the line of incidence i away from the antenna 3 in a direction as shown by the arrow, thus shielding the obstruction 2 from the radar.

It will be understood that the reflective surface 11 is oriented oblique to the line of incidence i when considered in plan view as shown in Fig. 1, and so extends in a direction of the line of incidence i in the sense that, when considered along the direction of the line of incidence i, the near edge 12 is closer to the antenna 3 than the far edge 13.

As illustrated, the or each shield 110 is oriented in use so that the reflective surface 11 reflects the wave travelling along the line of incidence i away from the receiving antenna 3.

The shield 110 may be arranged at a distance r from the antenna 3 such that $r \geq (2Da (Da/\lambda))$, which is to say, the shield 110 is in the far field of the radar (beyond the Fraunhofer distance). Alternatively, where the antenna is large in relation to the wavelength, so that $Da \geq 25\lambda$, the shield 110 can be arranged within the outer part of the near field at not less than one third of the Fraunhofer distance, which is to say, $r \geq 1/3 (2Da (Da/\lambda))$. In the illustrated example of Fig. 1, one of shields 110 is arranged in the far field and the other in the near field.

Vertical orientation

The novel shield finds applications particularly in fixed radar scenarios such as that shown in Fig. 1, where the radar is arranged to direct the wave along a horizontal line of incidence i to detect a target in a horizontal plane.

In such installations, a non-vertical orientation of the shield will cause practical difficulties in installation and may cause snow or debris to accumulate on the upwardly facing side of the shield 110.

Therefore, in a typical use situation where the line of incidence i is horizontal, it is desirable to design the shield for installation in a vertical (upright) orientation so that the reflection plane Pr is approximately vertical, defining an angle of inclination $\Phi = 0°$.

As shown in Fig. 3, preferably the or each shield 110 is arranged in the upright orientation so that the Y axis of the shield 110 is collinear with the vertical axis V which passes through the point of incidence i,Z. The perpendicular Z axis of the reflection plane Pr extends horizontally and so, when seen in a direction looking parallel with the horizontal ground surface G in the end view of Fig. 3, lies in the same plane as the horizontal line of incidence i.

All of these parameters are defined by reference to the the Spherical Coordinate System, further discussed below.

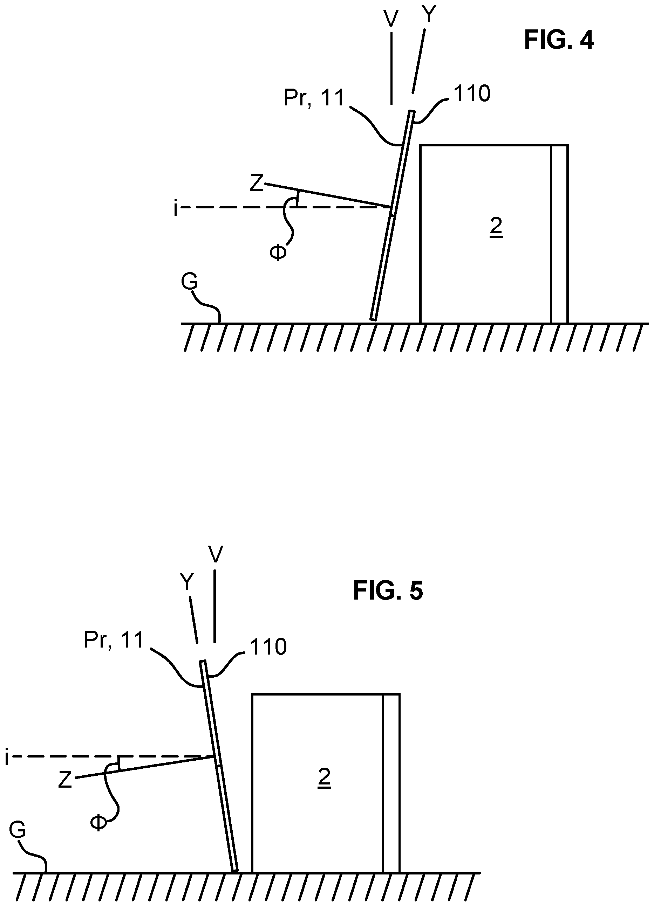

Figs. 4 and 5 show alternative positions of the first shield 110, in the same view as Fig. 3. When considered in the vertical plane of the drawing, the inclination angle $\Phi$ is defined in the vertical plane of the drawing to indicate the orientation of the Z axis of the reflection plane Pr relative to the line of incidence i, as the shield 110 is inclined away from the vertical orientation of Fig. 3.

The spherical coordinate system

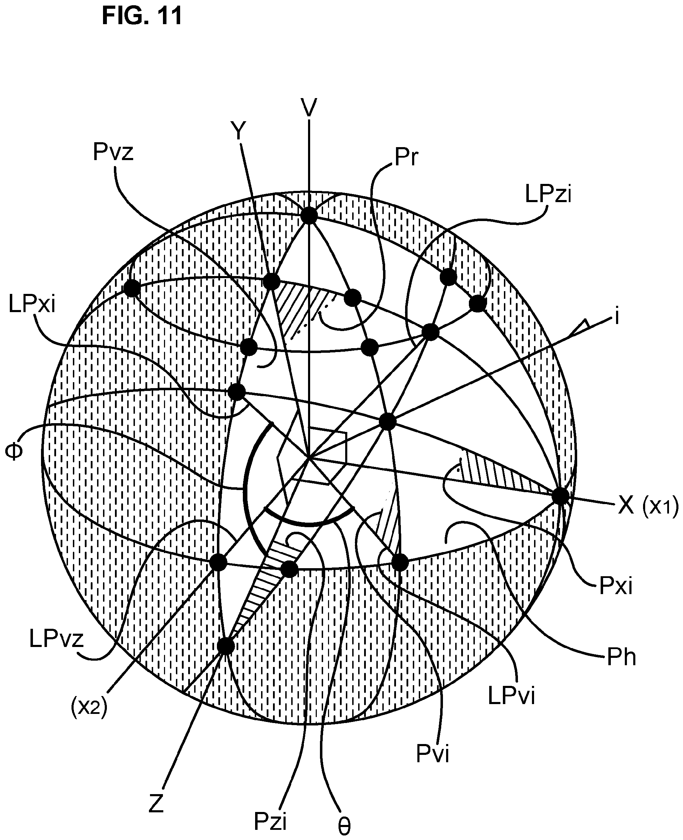

Fig. 11 illustrates the spherical coordinate system used in this specification. The black dots indicate where arcs intersect on the surface of a sphere. The point of incidence is at the centre of the sphere, and may be identified for convenience as the point of intersection of the line of incidence i and the Z axis (Z). For this reason the point of incidence is referred to herein by the reference "i,Z".

The spherical coordinate system : Definitions

In this specification, a plane means a flat (two-dimensional) plane.

A point of incidence (i,Z) is defined as any point at which the wave is incident on the reflective surface.

A line of incidence i is defined as a straight line along which the wave travels from the radar to a point of incidence.

The reflection plane Pr is defined as a plane tangent to the reflective surface at the point of incidence.

(So, if the reflective surface is flat, the reflection plane Pr will contain the reflective surface.)

The horizontal plane Ph is defined as a plane containing two mutually perpendicular horizontal axes (x1, x2) and passing through the point of incidence i,Z.

The vertical axis V is defined as a vertical line passing through the point of incidence.

The X, Y, and Z axes of the reflective surface are mutually perpendicular and intersect at the point of incidence.

The Z axis is defined as a line perpendicular to the reflection plane Pr at the point of incidence.

The normal plane Pvz is defined as a plane containing the vertical axis V and the Z axis.

The normal plane intersection line LPvz is defined as a line of intersection between the normal plane Pvz and the horizontal plane Ph.

The vertical incidence plane Pvi is defined as a plane containing the vertical axis V and the line of incidence i.

The vertical incidence plane intersection line LPvi is defined as a line of intersection between the vertical incidence plane Pvi and the horizontal plane Ph.

The X axis is defined as a line of intersection between the reflection plane Pr and the horizontal plane Ph.

The horizontal incidence plane Pxi is defined as a plane containing the X axis and the line of incidence i.

The horizontal incidence plane intersection line LPxi is defined as a line of intersection between the horizontal incidence plane Pxi and the normal plane Pvz.

The Y axis is defined as a line of intersection between the reflection plane Pr and the normal plane Pvz.

The Z incidence plane Pzi is defined as a plane containing the line of incidence i and the Z axis.

The Z incidence plane intersection line LPzi is defined as a line of intersection between the Z incidence plane Pzi and the reflection plane Pr.

The inclination angle $\Phi$ is defined in the normal plane Pvz as the angle between the horizontal incidence plane intersection line LPxi and the Z axis.

(So, the inclination angle $\Phi$ is a measure of how much the reflection plane Pr is tilted away from vertical with respect to the line of incidence i. If the line of incidence i is horizontal and the reflection plane Pr is vertical, then the inclination angle $\Phi$ will be zero, and will increase progressively as the reflection plane Pr is tilted away from vertical.)

The azimuth angle θ is defined in the horizontal plane Ph as the angle between the normal plane intersection line LPvz and the vertical incidence plane intersection line LPvi.

(So, the azimuth angle θ is a measure of how much the reflection plane Pr is rotated about the vertical axis V with respect to the line of incidence i. If the line of incidence i lies in the normal plane Pvz then the azimuth angle θ will be zero, and will increase progressively as the reflection plane Pr is rotated about the vertical axis V.)

(The inclination angle Φ and the azimuth angle θ are mutually independent. The inclination angle Φ and the azimuth angle θ are also independent of the orientation of the line of incidence i and of the reflection plane Pr with respect to the Earth's surface. Rather, they define a self-contained frame of reference whose focus is the point of incidence i,Z.)

The shield

Figs. 7, 8, 9 and 10 illustrate respectively first, second, third and fourth shields 110, 210, 310, 410 suitable for use in the installation of Fig. 1, in accordance with four different embodiments of the disclosure.

The reflective surface 11 of each shield 110, 210, 310, 410 is substantially without three-dimensional pattern and extends from its near edge 12 to its far edge 13. The near and far edges 12, 13 may be parallel and may be mirror-symmetric about the Y axis of the reflective surface 11, as shown, and are defined simply as the opposite edges of the reflective surface 11, respectively nearer to and further from the antenna 3.

By substantially without three-dimensional pattern is meant, substantially without any pyramidal or conical or other three-dimensional patterned configuration that extends over the area of the surface 11 to deflect or absorb the wave, as typical of prior art radar shielding panels. Thus, the reflective surface 11 is not regularly folded or inflected with alternate convexities and concavities.

An ordinary paint film will typically be thin enough in relation to the wavelength λ to be considered as effectively two-dimensional and so irrelevant to the function of the shield, which may have any desired visual appearance whether two-dimensionally patterned or not.

Preferably, as shown in each of the illustrated embodiments, the reflective surface 11 is flat.

As illustrated, the reflective surface 11 may have first and second lateral edges 16, 17, comprising an upper lateral edge 16 and a lower lateral edge 17. The lateral edges 16, 17 extend from the near edge 12 to the far edge 13. Both of the lateral edges 16, 17 may be straight, and they may also be parallel, as shown.

A flat shield with straight lateral edges 16, 17 is easy to design, fabricate, and install, and may be arranged to provide optimal performance.

The reflective surface 11 may be a surface of a panel 20, which may be a sheet or plate, e.g. a solid sheet or plate (which is to say, an imperforate sheet or plate), wherein the period p and length h of the or each vertex element 15' are defined in the plane of the panel 20.

The reflective surface 11 and panel 20 can be made from any material that is reflective at the frequency of the wave. Suitable materials include metals (e.g. steel or aluminium or aluminium alloy) and nonmetals (e.g. plastics or composite materials), depending on frequency. Thus, the panel 20 may be a simple, flat sheet or plate, such as a common sheet or plate of steel or aluminium or aluminium alloy.

The flat reflective surface 11 may extend over the whole of the panel 20, as illustrated.

In alternative embodiments (not shown), the reflective surface 11 and panel 20 may be bent to any convenient shape, either during manufacture or during field installation, as long as the shape does not produce an unacceptable reflection at the receiving antenna 3. For example, to better fit the available space around the obstruction 2, the shield could be slightly curved in two or three dimensions, or bent along one or more lines, while ensuring that all parts of the shield including the regions of the bends are oriented away from the antenna 3.

The shield 110, 210, 310 may include suitable supports, e.g. brackets 21 or other fixing elements, which may extend from its rear surface, opposite the reflective surface 11, for attaching it to or proximate the obstruction 2.

Vertices and vertex elements

Where the shield is designed for installation in a vertical orientation, i.e. where the angle of inclination Φ = 0°, the azimuth angle θ is selected to be large enough to deflect the wave effectively without unreasonably increasing the width w of the panel 20 (which must extend across the width of the object 2 to be shielded when viewed along the line of incidence i.)

A typical value of azimuth angle θ = 30° is generally considered acceptable and convenient for installation in a fixed radar scenario.

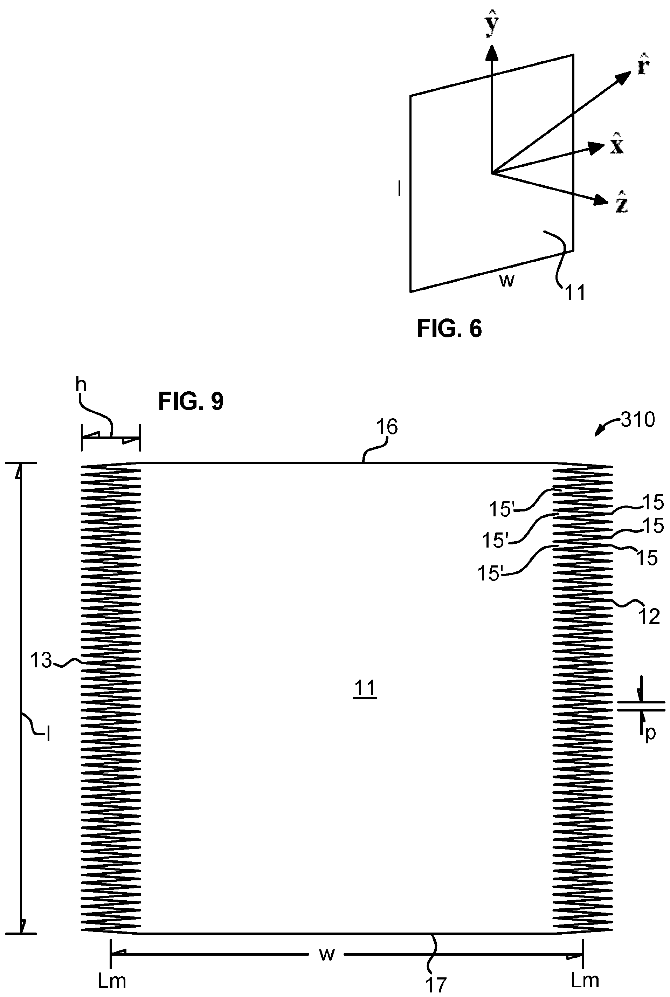

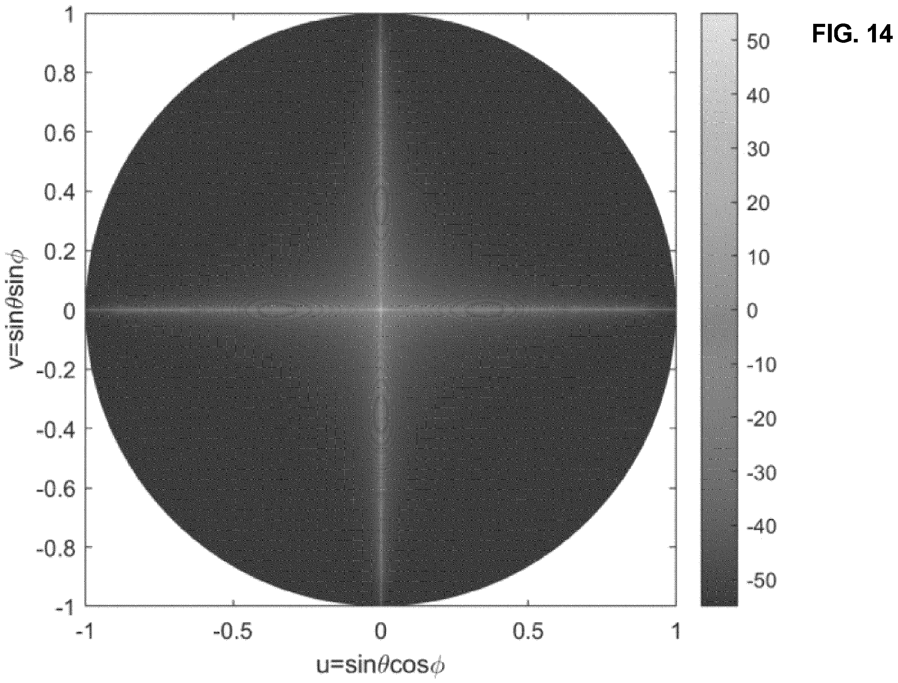

However, if the shield were a simple rectangular shape with straight edges (e.g. as shown in Fig. 6), this would usually result in a substantial radar cross section due to reflection and diffraction from the upright panel edge or edges (as shown in Fig. 14 and further discussed below.) In consequence, a rectangular shield oriented vertically and at a convenient azimuth angle θ = 30° would generate unacceptable clutter.

This problem is solved by arranging each of the near and far edges 12, 13 of the reflective surface 11 to define at least two contiguous, straight portions 14 defining at least one vertex 15, wherein each straight portion 14 defines a vertex 15 at a point of intersection with an adjacent straight portion 14.

Referring to Figs. 7, 8, 9 and 10, this arrangement can be see in each of the first, second, third and fourth shields 110, 210, 310, 410. Each of the near edge 12 and the far edge 13 includes at least two contiguous, straight portions 14 defining at least one vertex 15, wherein each straight portion 14 defines a respective vertex 15 at a point of intersection with an adjacent straight portion 14.

In this specification, a vertex means an angular point defined by the respective contiguous straight portions, whether inwardly or outwardly pointing. The respective contiguous straight portions may define an acute angle, an obtuse angle, or a right angle at the angular point. The term "vertices" is the plural of "vertex".

As illustrated by the first shield 110 of Fig. 7, each of the near edge and the far edge may consist of exactly one pair of contiguous, straight portions 14 defining a vertex 15 at a point of mutual intersection.

As illustrated by the second, third and fourth shields 210, 310, 410 of Figs. 8, 9 and 10, each of the near edge 12 and the far edge 13 may be serrated to define a plurality of pairs of contiguous, straight portions 14. Each pair of contiguous, straight portions 14 defines a respective vertex 15 at a point of mutual intersection. Adjacent ones of the vertices 15 or vertex elements 15' are spaced apart by a period p, further discussed below.

As illustrated, each vertex 15 may define a tip of a respective vertex element 15' which defines a portion of the reflective surface 11 and points outwardly away from the shield 110, 210, 310, 410. The vertex element 15' is bounded by a respective pair of contiguous, straight portions 14 defining the respective vertex 15, and by an imaginary base line 18. Each of the respective pair of contiguous, straight portions 14 extends from an outer end at the respective vertex 15 to an inner end 14' opposite the outer end. The base line 18 is defined as a straight line extending between the respective inner ends 14' of the respective pair of contiguous, straight portions 14.

Where the near or far edge 12, 13 is serrated, as illustrated by the example second, third and fourth shields of Figs. 8, 9 and 10, each vertex element 15' of the serrated edge may be referred to as a serration.

Alternatively, as illustrated in Fig. 8, a respective, inwardly pointing vertex 15" may be defined at the inwardly pointing ends 14' of the or each respective pair of contiguous straight portions 14.

As shown, each vertex element 15' may form an isosceles triangle with the base line 18 forming the base and the straight portions 14 forming its other two sides.

Preferably (as illustrated), all of the vertex elements or serrations 15' are of identical shape, length h and period p. Further preferably, each vertex element is mirror-symmetric about the bisector line Lb. This makes the panel 20 easy to manufacture and install in any required position.

Vertex elements: length h and symmetry

Referring to Figs. 7 and 8, the following parameters of the Spherical Coordinate System may be defined individually for each vertex element 15' of the shield.

The point of incidence i,Z is defined at the vertex 15 defining the tip of the respective vertex element 15'.

The reflection plane Pr is defined as a plane tangent to the reflective surface 11 at the point of incidence i,Z.

The reflection plane Pr contains the respective pair of contiguous straight portions 14 defining the respective vertex element 15'.

A vertex angle $\alpha$ is defined in the reflection plane Pr between the respective pair of contiguous straight portions 14.

A bisector line Lb is defined as a line bisecting the vertex angle $\alpha$ in the reflection plane Pr.

The bisector line Lb defines a length h of the respective vertex element 15' between the respective vertex 15 and base line 18.

When these parameters are defined as above for the respective vertex element 15', for each vertex element 15' of the shield, optionally: $h \geq 3\lambda$.

Selecting a value $h \geq 3\lambda$ helps to ensure that the shield performs as expected when designed and installed by reference to the physical optics model.

Additionally or alternatively, when these parameters are defined as above for the respective vertex element 15', each vertex element 15' of the shield may be mirror-symmetric about the respective bisector line Lb.

A mirror-symmetric vertex element 15' helps ensure that the shield 110, 210, 310, 410 is equally insensitive to inclination in either direction away from vertical, especially where the vertex and lateral edge angles of orientation Aov, Aoe (referred to below under the headings "Orientation about the Z axis ...") are arranged within a relatively small angular range of not more than 5°.

Shield: dimensions

Referring to Figs. 7 - 10, the shield 110, 210, 310, 410 may have an average width w between the near and far edges 12, 13, wherein w > 50 λ.

The average width w is defined between two median lines Lm that pass centrally through the bisector lines Lb of the vertex elements 15' defining, respectively, the near and far edges 12, 13 of the shield 110, 210, 310.

Selecting a value w > 50 λ helps to ensure that the shield 110, 210, 310, 410 performs as expected when designed and installed by reference to the geometrical optics model.

In practice, for convenient installation and satisfactory shielding in most fixed radar applications, it is preferred to select the form factor of the shield so that h < w/8. That is to say, preferably the length h of each respective vertex element is less than one eighth of the average width w of the shield.

For the same reasons, an average lateral dimension l of the shield between its lateral edges, perpendicular to the average width w, may be selected so that l = w +/- 30%.

Vertex elements: dimensions

Referring to Figs. 8 and 9, where (as shown) the near or far edge 12, 13 of the shield consists of a whole number N of equally spaced vertex elements or serrations 15', wherein adjacent ones of the vertex elements are spaced apart by a period p:

$$p = l/N$$

If the near or far edge 12, 13 of the shield consists of a single vertex element 15', as exemplified by the first shield 110 of Fig. 7, then a number N of vertex elements can be defined as N = 1, and a period p can be defined as p = l/N (hence, p = l).

For the first shield 110 of Fig. 7, N = 1 and w = l = 60cm, so p = 60cm.

For the second shield 210 of Fig. 8, N = 10 and w = l = 60cm, so p = 6cm.

For the third shield 310 of Fig. 9, N = 60 and w = l = 60cm, so p = 1cm.

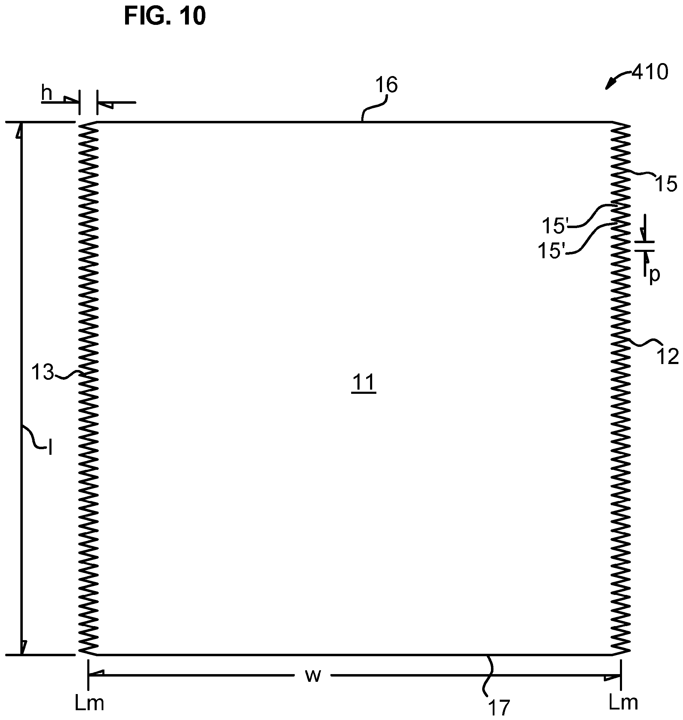

For the fourth shield 410 of Fig. 10, N = 60 and w = l = 60cm, so p = 1cm.

Assuming that all vertex elements have the same period p and the same length h, and that each vertex element 15' is mirror-symmetric about the respective bisector line Lb, the length t of each straight portion 14 is given by:

$$t = \sqrt{h^2 + \frac{p^2}{4}}$$

The vertex angle α is given by:

$$\alpha = 2\arctan\left(\frac{p}{2h}\right)$$

Thickness T

Referring to Figs. 7 and 8, where the shield 110, 210, 310 is formed as a simple thin panel (sheet or plate) 20 having a thickness T, the front (near) edge 12 of the reflective surface 11 bounding the or each straight portion 14 or vertex element 15' is spaced apart from the adjacent rear edge 12' of the panel 20 by the thickness T. Thus, each vertex element 15' at the end of the panel that faces towards the radar will have a near edge 12 and an adjacent rear edge 12' spaced apart by the thickness dimension T. Clutter can also be generated by diffraction of the wave from the rear edge 12'.

This can be suppressed by selecting the thickness T of the panel (sheet or plate) 20 to be equal to one quarter of the wavelength λ or an odd multiple of one quarter of the wavelength λ.

An odd multiple may be any odd positive integer (whole number) greater than 1.

For example, T may be 1/4 λ or 3/4 λ or 5/4 λ.

This ensures that the waves generated by diffraction from the respective near edge 12 and rear edge 12' of each straight portion 14 defining a vertex 15 or vertex element 15', which is exposed to the radar in its thickness dimension, will cancel each other by destructive interference.

This arrangement is simple to manufacture, merely by selecting an appropriate gauge of sheet or plate material, and is found to effectively suppress unwanted signals (clutter) resulting from diffraction of the wave by the rear edge 12' of the panel 20 facing towards the radar.

In the illustrated example, the frequency of the radar is about 75GHz, so $\lambda \approx 4mm$, P = 10mm, H = 20mm, and T = 1mm (or alternatively could be 3mm or 5mm or 7mm etc.)

Orientation about the Z axis : lateral edges

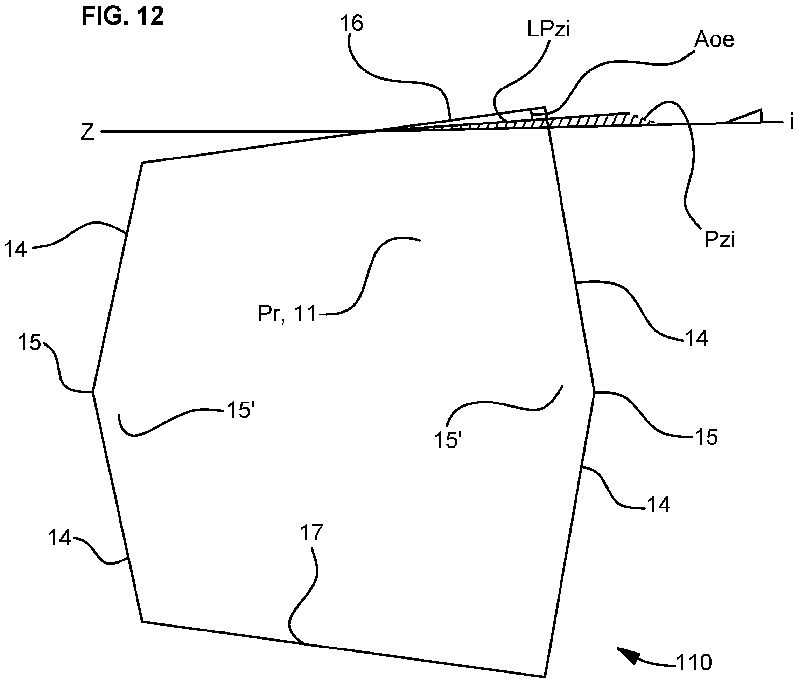

Referring now to Fig. 12, independently of the inclination angle $\Phi$ and the azimuth angle $\theta$, where the reflective surface 11 is flat, and the lateral edges 16, 17 of the shield are straight, the lateral edges may be oriented in rotation about the Z axis relative to the line of incidence i to define a lateral edge angle of orientation Aoe by reference to the following parameters of the spherical coordinate system as explained above with reference to Fig. 11.

The reflection plane Pr is defined as a plane containing the reflective surface 11.

The Z axis is defined as a line perpendicular to the reflective surface 11 at the point of incidence i,Z.

The Z incidence plane Pzi is defined as a plane containing the line of incidence i and the Z axis.

The Z incidence plane intersection line LPzi is defined as a line of intersection between the Z incidence plane Pzi and the reflection plane Pr.

For each of the lateral edges 16, 17 of the shield, when the point of incidence i,Z is defined at the respective lateral edge, a lateral edge angle of orientation Aoe is defined in the reflection plane Pr between the respective lateral edge 16, 17 and the Z incidence plane intersection line LPzi.

Preferably, Aoe $\leq$ 5°.

For each straight lateral edge 16, 17 of the shield, the lateral edge angle of orientation Aoe defines the orientation of the lateral edge 16 or 17 in rotation about the Z axis with respect to the line of incidence i.

So, for a horizontal line of incidence i and a vertical reflection plane Pr ($\Phi = 0°$), it may be considered as a measure of the orientation of the straight lateral edges 16, 17 relative to horizontal; or, where the lateral edges 16, 17 are parallel with the width or length axis w of the shield, a measure of how much the shield 10 is rotated about the Z axis in the reflection plane Pr relative to horizontal.

It is found that the RCS generated by the lateral edges 16, 17 of the shield 110, 210, 310, 410 is minimised when both lateral edges 16, 17 are straight and oriented so that Aoe $\leq$ 5°.

For example, if the shield 110, 210, 310 is to be installed in a vertical position ($\Phi = 0°$) and the line of incidence i is horizontal, then the lateral edges 16, 17 may be straight and parallel and oriented so as to be horizontal in the installed position. This makes it easy to design and fabricate the shield, and allows simple installation with a 5° margin of error by aligning the lateral edges 16, 17 as near as possible to horizontal.

Note that Fig. 12 is a perspective view of the first shield 110, and only one lateral edge angle of orientation Aoe is shown, which happens to be within the boundaries of the reflective surface 11 defined by its lateral edges 16, 17. However, it will be understood that the reflection plane Pr is not bounded by the lateral edges 16, 17, and so the lateral edge angle of orientation Aoe can be defined on either side of either lateral edge, depending on the orientation of the shield with respect to the line of incidence i.

Orientation about the Z axis : vertex elements

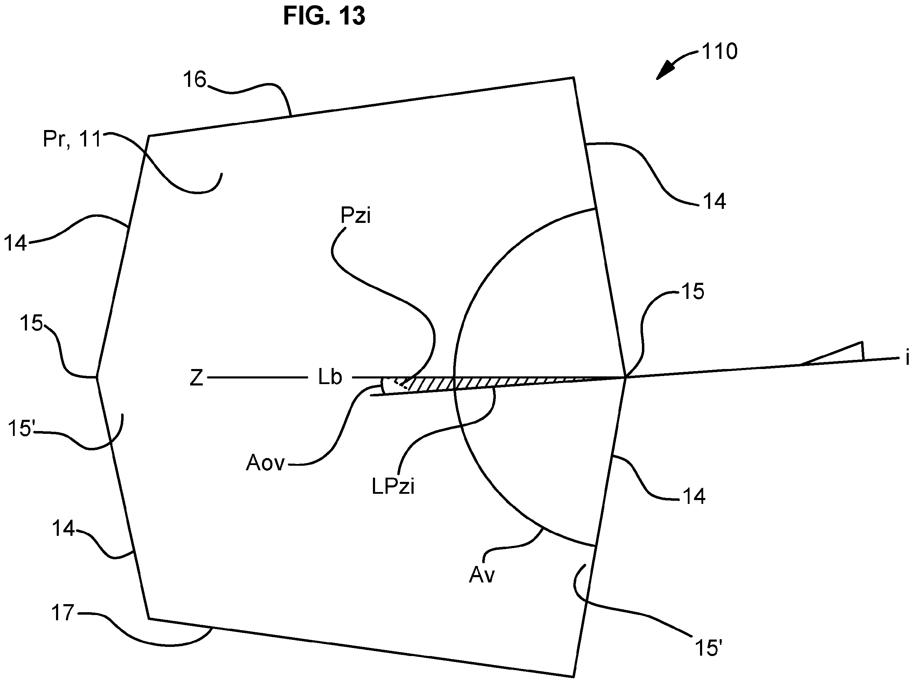

Referring now to Fig. 13, the vertex elements 15' of the shield 110, 210, 310 may be oriented in rotation about the Z axis relative to the line of incidence i to define a vertex angle of orientation Aov, which is defined for any given vertex 15 by applying the parameters of the spherical coordinate system as explained above with reference to Fig. 11, as follows.

For any respective vertex 15 of the shield, a reflection plane Pr is defined as a plane tangent to the reflective surface 11 at the point of incidence i,Z, wherein the reflection plane Pr contains a respective pair of contiguous straight portions 14 defining the respective vertex 15, and the respective vertex 15 defines the point of incidence i,Z.

The Z axis is defined as a line Z perpendicular to the reflective surface 11 at the point of incidence i,Z.

The Z incidence plane Pzi is defined as a plane containing the line of incidence i and the Z axis.

The Z incidence plane intersection line LPzi is defined as a line of intersection between the Z incidence plane Pzi and the reflection plane Pr.

A vertex angle $\alpha$ is defined in the reflection plane Pr between the respective pair of contiguous straight portions 14.

A bisector line Lb is defined as a line bisecting the vertex angle $\alpha$ in the reflection plane Pr.

The vertex angle of orientation Aov is defined in the reflection plane Pr between the bisector line Lb and the Z incidence plane intersection line LPzi.

Preferably, for each respective vertex of the shield, Aov $\leq$ 5°.

The vertex angle of orientation Aov defines the orientation of the vertex elements 15' in rotation about the Z axis with respect to the line of incidence i.

So, for a horizontal line of incidence i and a vertical reflection plane Pr ($\Phi = 0°$), it can be considered as a measure of the orientation the vertex elements 15' in the reflection plane Pr relative to horizontal; or, where the vertex elements 15' are aligned with the width or length axis w of the shield, a measure of how much the shield 110, 210, 310, 410 is rotated about the Z axis, in the reflection plane Pr, relative to horizontal.

A value of Aov $\leq 5°$ helps ensure that the shield is equally insensitive to the inclination angle $\Phi$ in either direction away from vertical, so that when oriented vertically the response from the shield lies mid-way between the two spectral lines generated by reflection and diffraction from the respective contiguous straight portions 14, which is to say, on the horizontal centre line of the respective RCS graph (where v=0).

Most preferably, the reflective surface 11 is flat and the lateral edges 16, 17 are straight, and Aoe $\leq 5°$, and Aov $\leq 5°$.

Calculation of Radar Cross Section (RCS) - the simple shield

The strength of the signal returned by the shield - which is to say, how much clutter the shield produces in the radar image - can be represented quantitatively by its radar cross section (RCS), also referred to as the radar signature, which is expressed in dBsm (decibels per square metre) as known in the art.

The calculation of the RCS is illustrated by reference to Fig. 6.

Fig. 6 shows a simple shield formed as a flat, rectangular plate defining a reflective surface 11 having mutually perpendicular x, y and z axes intersecting at the centre of the reflective surface, which represents the point of incidence of the waves on the reflective surface.

The x, y and z axes correspond to the X, Y and Z axes of the Spherical Coordinate System as defined above.

The z axis is perpendicular to the reflective surface.

The x and y axes lie in the plane of the reflective surface.

The x axis is horizontal.

The observation direction r̂ is the direction in which the reflected or diffracted waves travel from the point of incidence to the point at which they are detected, and so (where the waves are emitted from and detected by the same antenna) corresponds to the direction of incidence i.

The Radar Cross Section (RCS) pattern of the simple shield of Fig. 6, under the Physical Optics approximation, is given by

$$\sigma_{rp}(\theta,\phi) = \frac{\left[ k \cos \theta\, wl\, \text{sinc}\left( kwu \right) \text{sinc}\left( klv \right) \right]^2}{\pi}$$

In this formula:

$\sigma_{rp}$ is the value of the Radar Cross Section (RCS) of the rectangular plate in the far field in dBsm (decibels per square metre).

w is the width (or length) of the plate along the x axis.

l is the lateral dimension (or height) of the plate along the y axis.

k is the free space wavenumber, wherein $k=2\Pi/\lambda$, and $\lambda$ is the wavelength of the emitted wave.

The observation direction i is defined by reference to the azimuth angle $\theta$ and the angle of inclination $\Phi$, by the formula:

$$\hat{\mathbf{r}} = \sin \theta \left( \cos \phi \hat{\mathbf{x}} + \sin \phi \hat{\mathbf{y}} \right) + \cos \theta \hat{\mathbf{z}}$$

wherein:

u = sin$\theta$ cos$\Phi$
v = sin$\theta$ sin$\Phi$
and

$$\text{sinc}(x) = \begin{cases} \dfrac{\sin(x)}{x} & x \neq 0 \\ 1 & x = 0 \end{cases}$$

Calculation of Radar Cross Section (RCS) - the novel shield

Referring to Figs. 7 - 10, the lateral dimension l of the novel shield 110, 210, 310, 410 is defined between its lateral edges 16, 17, while the width w is defined between the median lines Lm (as mentioned above under the heading "Shield: dimensions".) Thus, the area A of the reflective surface 11 is defined (irrespective of the number N and period p of the serrations or vertex elements 15') as (A = wl).

The radar cross section (RCS) of embodiments of the novel shield 110, 210, 310 is calculated under the physical optics approximation as

$$\sigma_{se}(\theta,\phi) = \frac{\cos^2\theta}{\pi}\Big(kl(w-h)\sin^2\phi\,\text{sinc}(klu)\,\text{sinc}\big[k(w-h)v\big]$$

$$+\frac{t}{\sin\theta}\frac{\sin(klv)}{\sin(kpv)}\left\{\sin\left(\phi+\frac{\alpha}{2}\right)\text{sinc}\left[kt\sin\theta\cos\left(\phi+\frac{\alpha}{2}\right)\right]\sin\left[k\left(wu+\frac{p}{2}v\right)\right]\right.$$

$$\left.-\sin\left(\phi-\frac{\alpha}{2}\right)\text{sinc}\left[kt\sin\theta\cos\left(\phi-\frac{\alpha}{2}\right)\right]\sin\left[k\left(wu-\frac{p}{2}v\right)\right]\right\}\Big)^2$$

The formula assumes that all of the vertex elements or serrations 15' are of identical shape, length h and period p, and each vertex element is mirror-symmetric about the bisector line Lb.

In the formula:

$\sigma_{se}$ is the value of the Radar Cross Section (RCS) of the novel shield in the far field in dBsm (decibels per square metre).

h is the length of the vertex element 15' taken along the bisector line Lb between the vertex 15 and base line 18.

The period p, length t and vertex angle $\alpha$ are determined as explained above under the subheading "Vertex elements: dimensions".

The remaining terms are as set out above with reference to the formula for the simple shield.

The radar cross section RCS of the simple shield plotted against the orientation of the shield represented by the coordinate system u,v

Fig. 14 shows the calculated values of $\sigma_{rp}$ (far field radar cross section RCS) of the simple rectangular plate of Fig. 6 as obtained from the above formulae, wherein the dimensions of the plate are w=l=60 cm, for a wave of frequency f = 76.5 GHz.

The model assumes that the line of incidence i is horizontal and the straight top and bottom edges of the shield are oriented horizontally (so no rotation about the Z axis.)

The value of the far field radar cross section RCS is represented by the shade of the graph, as shown on the scale to the right of the graph, from -50 dBsm to 50 dBsm.

The circular space of the graph represents the orientation of the reflective surface in both azimuth and inclination, defined by the parameter space u, v. (The parameter space can be better understood from the explanation in the next sections.)

Thus, the distribution of the calculated value of RCS over the circular space of the graph, represented by the shade of the graph, shows how the RCS changes as the plate is tilted with respect to a fixed observation direction $\hat{r}$ to adjust the azimuth angle $\theta$ and the angle of inclination $\Phi$, from a specular or face-on orientation at the central point of the graph where $\Phi = 0°$ and $\theta = 0°$, through 90° in any given direction towards an edge-on orientation at the periphery of the circular space.

It can be seen that the reflected signal returned by the rectangular plate is mainly concentrated along two spectral lines: a vertical line (u=0) due to scattering from the horizontal, upper and lower edges of the panel, and a horizontal line due to scattering from the vertical, near and far edges of the panel. In the specular (face-on) orientation at the central point of the graph where v=u=0 the RCS reaches the peak maximum value

$$\sigma_{rp}\left(0,\phi\right)=\frac{\left[kwl\right]^2}{\pi}=50.3\text{dBsm}\approx100.000\text{m}^2$$

The light shaded line along the horizontal central axis (v=0) indicates that the simple rectangular shield of Fig. 6 has a strong RCS for all azimuth angles θ when arranged in a vertical plane, which is to say, when the angle of inclination Φ=0°.

By rotating the shield in azimuth in either direction about the y axis, to move the value of u towards 1 or -1, the value of the RCS is reduced slightly (as shown by the slight, gradual darkening of the shade of the horizontal spectral line) as the signal returned by the upper and lower edges is deflected away from the radar.

However, the effect is small, and the horizontal spectral line is clearly visible across the whole width of the plot. Thus, as long as the shield remains in an upright orientation, the signal returned by the vertical, near and far edges still gives an unacceptably large RCS.

As discussed above, it is desirable to arrange the shield in an upright orientation, i.e. as near as possible in a vertical plane, both for ease of installation and to avoid contamination of the reflective surface with snow or debris.

Thus, it can be appreciated from Fig. 14 that the simple rectangular shield will not perform well when arranged in an upright orientation, because its near and far edges reflect the emitted waves back to the radar, irrespective of the azimuth angle θ.

The coordinate system u, v

The circular space of the graph of Fig. 14 represents the three-dimensional orientation of the reflective surface as defined by azimuth angle θ and angle of inclination Φ. The combination of values at each position in the circular space of the graph is defined by the coordinates u and v, wherein v=(sinθ sinΦ), and u=(sinθ cosΦ).

For each of the parameters θ and Φ, the specular or face-on orientation of the reflective surface is assigned an angular value of 0°, corresponding to alignment of the Z-axis with the observation direction r̂ or direction of incidence i. The angular value changes in a postive or negative direction up to 90° or -90° depending on the direction of rotation about the respective x or y axis.

It will be understood that the sine has a value of 0 in the 0° (specular or face-on) orientation, and 1 or -1 in the 90° or -90° (edge-on) orientation, while the cosine has a value of 1 in the 0° (specular or face-on) orientation, and 0 in the 90° or -90° (edge-on) orientation.

The values of u and v thus represent an angular orientation of the reflective surface of the shield in two degrees of freedom, about the x axis (in inclination Φ) and the y axis (in azimuth θ), from -90° (left or bottom edge-on to the observation direction r̂), through 0° (facing in the specular direction, perpendicular or face-on to the observation direction r), to 90° (right or top edge-on to the observation direction r̂).

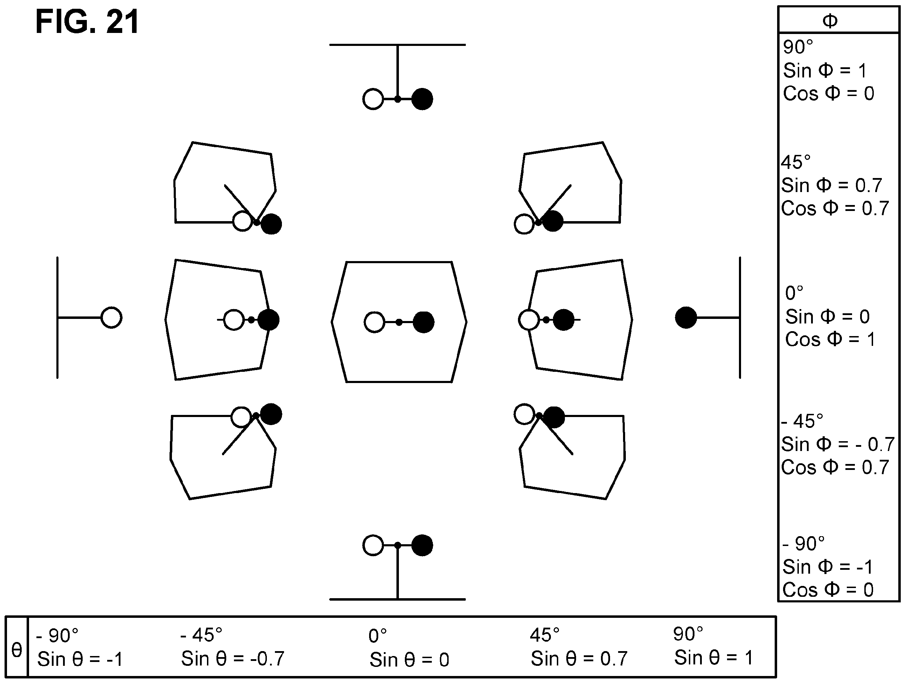

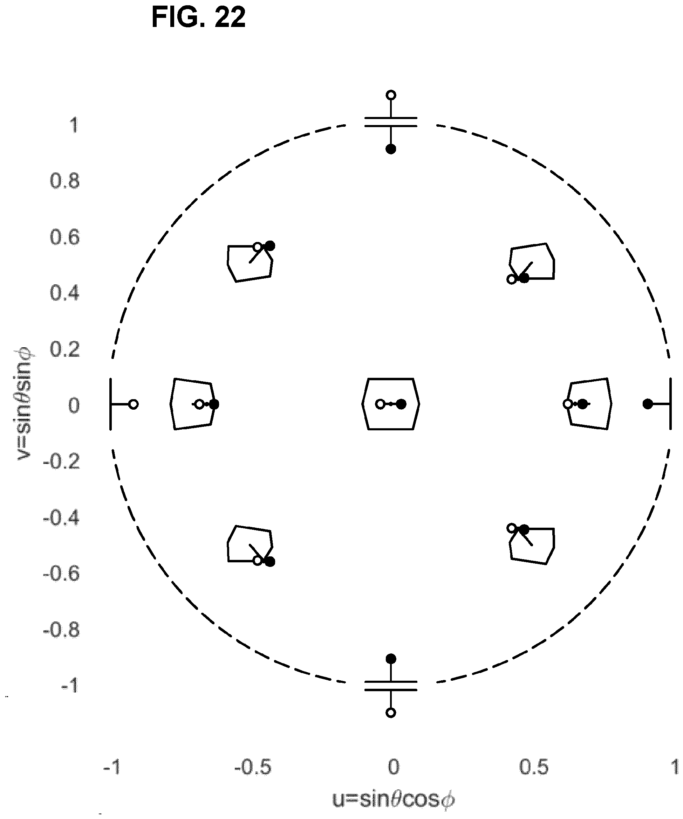

Figs. 21 and 22: an intuitive representation of the coordinate system u, v

Figs. 21 and 22 provide a more intuitive representation of how the orientation of the reflective surface 11 maps onto the circular space of the graph of Figs. 14 - 18.

In Figs. 21 and 22, purely for ease of understanding, and only for the purpose of these figures, the reflective surface 11 of the shield is represented by a generally rectangular shape with a single vertex at each end, and having a dumbell shaped object fixed in front of the reflective surface. The dumbell shaped object includes two spherical balls, one black and one white, joined by a short bar. The short bar is fixed at its centre point to another bar representing the Z axis, which extends from the centre of the shield perpendicular to the reflective surface.

This makes it easier to identify the orientation of the shield when rotated up to 90° in any direction with respect to the observation direction r̂ (which is perpendicular to the plane of the drawing.) As mentioned above, if the wave is both emitted and detected by the same radar, the observation direction r will be the same as the direction of incidence i.

Using this representation of the shield, Fig. 21 illustrates how the values of Φ and θ are defined (in degrees) for different orientations of the shield, as seen from the observation direction r̂, together with the corresponding sine (Sin) and cosine (Cos) values from which the coordinate values u and v are derived.

Fig. 22 shows how the illustrated orientations of the shield map onto the circular space of the graph.

The graph represents all possible orientations with respect to the observation direction r̂, from the face-on position at the centre of the graph - (which is to say, θ=0° and Φ=0°, so the observation direction r̂ lies along the Z axis) - to positions where the shield is rotated through 90° so the observation direction i is tangent to the reflective surface, represented at the edge of the circular space.

Within this 90° range of movement in all directions, the values of u and v are selected to show how the radar cross section of the shield changes through all possible combinations of values of azimuth angle θ and angle of inclination Φ, except where the azimuth angle θ=0° (which is to say, except where the shield is oriented face-on to the observation direction î about the y axis, so not angled to the left or right when viewed along the observation direction î.)

If the angle of inclination Φ=0° - (which is to say, the shield is oriented face-on to the observation direction i about the X axis, so not inclined up or down when viewed along the observation direction r) - then the changing value of azimuth angle θ is represented by the position along a horizontal centre line of the graph, i.e. the line where v=0. If the shield is face-on as seen along the observation direction î, then the value is at the centre of the graph. As the shield is rotated in azimuth clockwise (as seen from above), the value moves towards the right hand edge of the graph. As the shield is rotated in azimuth anticlockwise, the value moves towards the left hand edge of the graph.

If at the same time the shield is inclined about its X axis (so up or down, as viewed along the observation direction r) - then the changing value of angle of inclination Φ moves the value up or down towards the top or bottom edge of the graph. (Since the illustrated panel is symmetrical, the value distribution is also symmetrical, and so the up or down direction is not significant - but can be appreciated from the illustration in Fig. 22.)

Where the azimuth angle θ=0° - which is to say, where the shield remains oriented face-on to the observation direction i about the Y axis, so not angled to the left or right when viewed along the observation direction i - all values are represented at the centre point of the graph, irrespective of the inclination angle Φ. So, where θ=0°, the graph does not differentiate between different values as the shield is rotated about the X-axis, so up and down as viewed along the observation direction î.

Since the shield is oriented in use at a non-zero azimuth angle θ - so as to be oblique to the direction of incidence i, hence the observation direction r - these non-differentiated values are not significant.

Thus, it will be appreciated that the values of u and v are selected to show how the radar cross section of the shield changes with the azimuth angle θ and the angle of inclination Φ, through all permitted value combinations in the use position of the shield with a non-zero azimuth angle θ.

Figs. 14 - 18 : the shaded value scale representing RCS

The illustrated graphs of Figs. 14 - 18 showing RCS on the coordinate system u,v are converted from colour to greyscale.

The value of the far field radar cross section RCS in dBsm is represented by the original colour of the pixels on the graph, from -50 dBsm to 50 dBsm as shown in the scale to the right of the graph, and so by the shade of the graph as shown in greyscale.

The original colour of the scale is graduated from light yellow at the top above 50dBsm, through orange to green and then to a light blue in the centre at 0dBsm, and then in progressively darker shades of blue to below -50dBsm at the bottom of the scale.

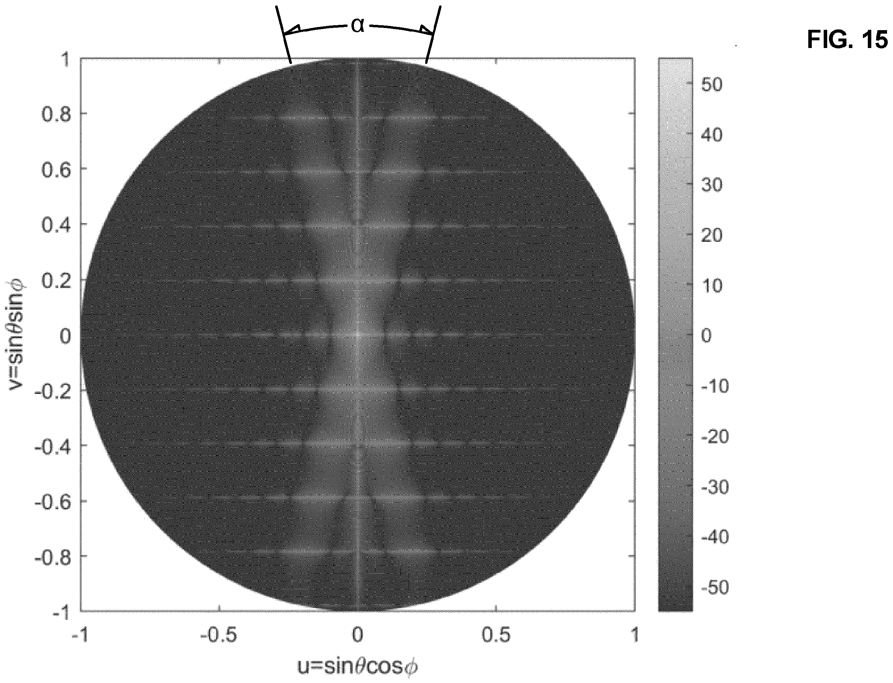

To assist in judging the values represented in greyscale, in all five graphs, the dark background shade is a uniform, dark blue in the original and corresponds to a value below -50 dBsm, at the bottom of the scale. In all three graphs, the lighter lines and points (and the skew strips of Fig. 15) are uniformly of a light blue colour in the original, corresponding to a value of about -5dBsm to -15dBsm on the scale, except for the point exactly in the centre where u=v=0. This centre point is a light yellow in the original, indicating a value over 50dBsm at the top of the scale, but is so small as to have barely discernible extent in any direction. The remaining values are absent.

The radar cross section RCS of the novel shield plotted against the orientation of the shield represented by the coordinate system u,v

Figs. 15, 16, 17 and 18 show the calculated far field radar cross section RCS of the novel shield (the value $\sigma_{se}$ calculated as explained above under the heading "The Radar Cross Section (RCS) of the novel shield"), mapped in the same way as Fig. 14 representing the simple shield of Fig. 6.

Fig. 15 represents the fourth shield 410 of Fig. 10.

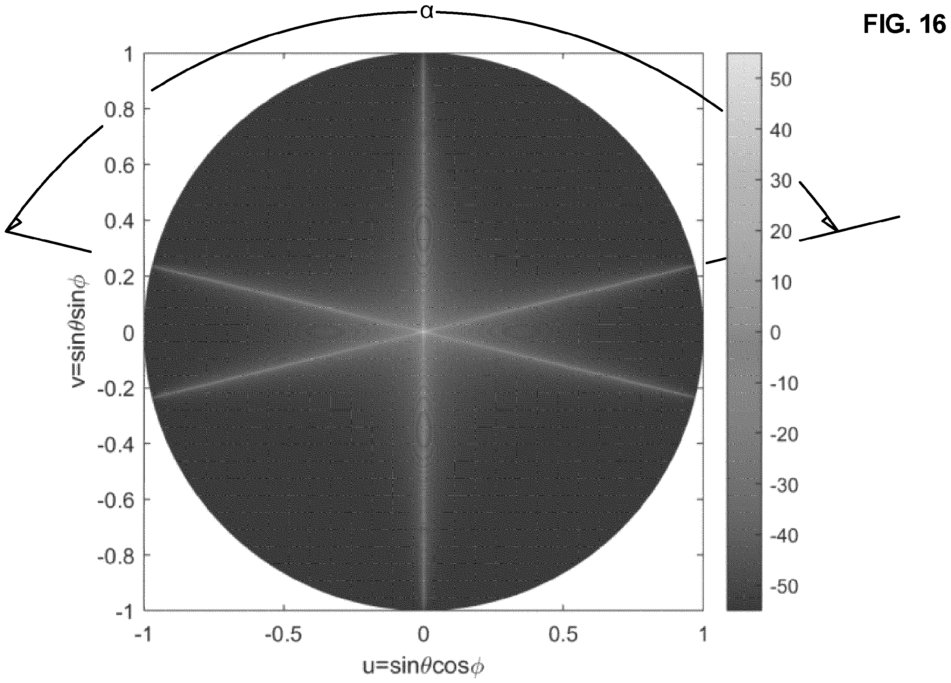

Fig. 16 represents the RCS of the first shield 110 of Fig. 7.

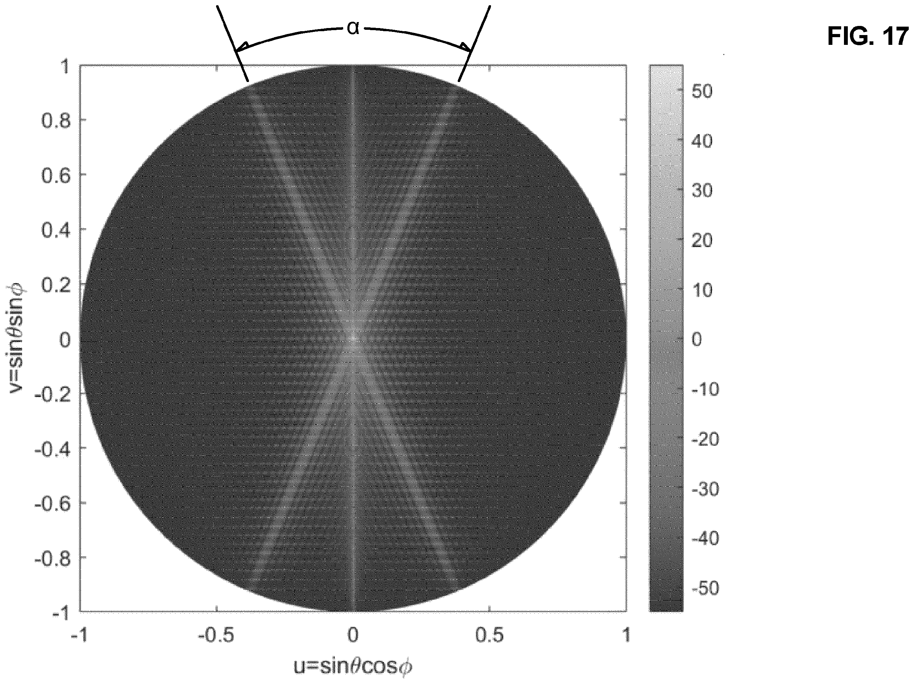

Fig. 17 represents the RCS of the second shield 210 of Fig. 8.

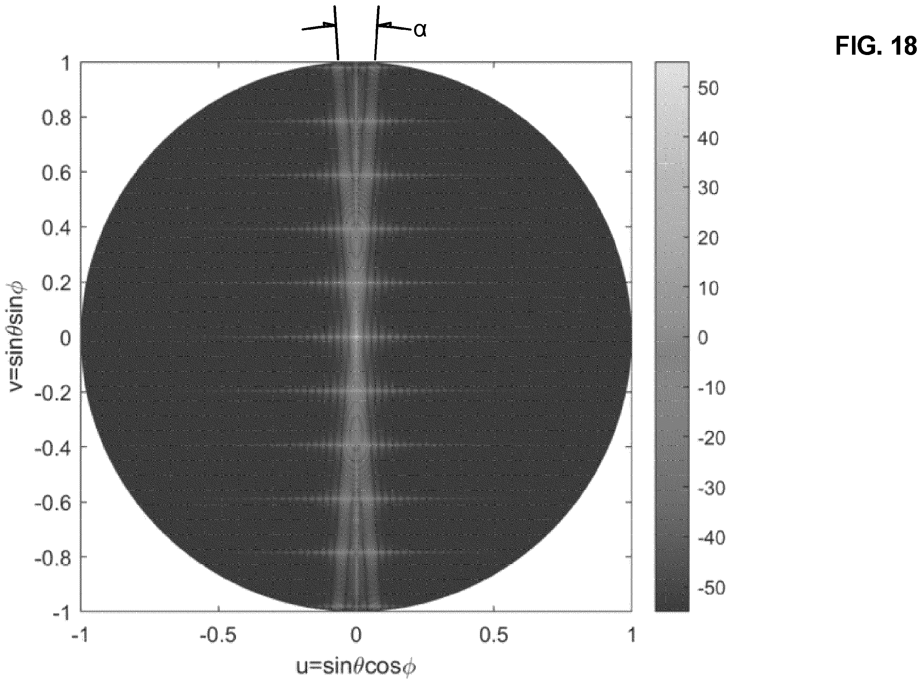

Fig. 18 represents the RCS of the third shield 310 of Fig. 9.

As in Fig. 14, in each figure the RCS of the respective shield 110, 210, 310 is modelled at a frequency f=76.5 GHz. The model assumes that the line of incidence i is horizontal and the straight top and bottom edges 16, 17 are also oriented horizontally (so no rotation about the Z axis.)

As described above, the near and far edges 12, 13 of the first shield 110 (Fig. 7) each consist of a single pair of contiguous straight portions 14 defining a single vertex 15 at their point of mutual intersection, wherein:

w = 1 = 60cm
h = 7.3 cm

p = 60cm
N = 1
$\alpha$ = 152.6°

The near and far edges 12, 13 of the second shield 210 (Fig. 8) have multiple contiguous straight portions 14 defining multiple contiguous serrations or vertex elements 15' and vertices 15 (smaller period P), wherein:

w = l = 60cm
h = 7.3 cm
p = 6cm
N = 10
$\alpha$ = 44.7°

The near and far edges 12, 13 of the third shield 310 (Fig. 9) have more numerous contiguous straight portions 14 defining more numerous, narrower, contiguous serrations or vertex elements 15' and vertices 15 (yet smaller period P), wherein:

w = 1 = 60cm
h = 7.3 cm
p = 1cm
N = 60
$\alpha$ = 7.8°

The near and far edges 12, 13 of the fourth shield 410 (Fig. 10) have multiple contiguous straight portions 14 defining multiple contiguous serrations or vertex elements 15' and vertices 15 (smaller period P), wherein:

w = 1 = 60cm
h = 2 cm
p = 1cm
N = 60
$\alpha$ = 28°

The area A of each shield 110, 210, 310, 410 is given by (A = wl) and is the same as the area of the simple shield of Fig. 6. Thus, the peak value for the RCS of each shield 110, 210, 310, 410 (at the central point of the plot, where $\theta = \Phi = 0°$) is the same as that of Fig. 14 for the simple shield of Fig. 6.
The RCS in dBsm is shown for different values of $\theta$ and $\Phi$ using the coordinate system u, v as explained above.

The fourth shield 410

Comparing Figs. 14 and 15, when the straight near and far edges 12, 13 of the simple shield of Fig. 6 are replaced with the serrated edges 12, 13 of the fourth shield 410, it can be seen that the horizontal line on the plot of Fig. 14 is reduced in intensity as the energy is spread in many directions by the serrated edges, so that the plot of Fig. 15 exhibits two skew strips having a spectral width inversely proportional to the length t.
Each strip is tilted away from the vertical axis of the graph by an angle of $\alpha/2$ so that the two strips define an included angle equal to the vertex angle $\alpha$.
Accordingly, by selecting the length t of the straight portions of each vertex element, it is possible to determine and control the spectral width of the reflected signal; and, by selecting the vertex angle $\alpha$, it is possible to determine and control the sensitivity of the RCS of the shield to the inclination angle $\Phi$, for any given azimuth angle $\theta$.
Thus, the novel shield can be fabricated to exhibit the desired reduction in RCS, compared with the simple shield of Fig. 6, when installed at the selected azimuth angle $\theta$ and inclination angle $\Phi$.

RCS is a function of h independently of N and p

Again comparing Figs. 14 and 15, it can be seen that, where the novel panel is installed in a vertical orientation, which is to say, with an angle of inclination $\Phi = 0°$, the reduction in RCS compared with the simple shield of equal area A depends only on the azimuth angle $\theta$ and the length h of the vertex elements or serrations, and does not change with the number N or period p of the vertex elements.
Considering only the horizontal plane where $\Phi = 0°$, $\Pi$ (which is to say, only the values of RCS for the upright

orientation where $\Phi = 0°$), the RCS of the simple shield of Fig. 6, as represented in Fig. 14, is calculated as $\sigma$rp, and the RCS of the fourth shield 410, as represented in Fig. 15, is calculated as ase, as follows.

For the simple shield of Fig. 6 and Fig. 14:

$$\sigma_{rp}(\theta, \phi = 0) = \frac{\left[k\cos\theta wl\,\mathrm{sinc}(kw\sin\theta)\right]^2}{\pi} \sim \frac{l^2}{\pi}\cot^2\theta$$

For the fourth shield 410 of Fig. 10 and Fig. 15:

$$\sigma_{se}(\theta, \phi = 0) = \frac{\left[k\cos\theta wl\,\mathrm{sinc}(kw\sin\theta)\,\mathrm{sinc}(kh\sin\theta)\right]^2}{\pi} \sim \frac{l^2\cot^2\theta}{\pi(kh\sin\theta)^2}$$

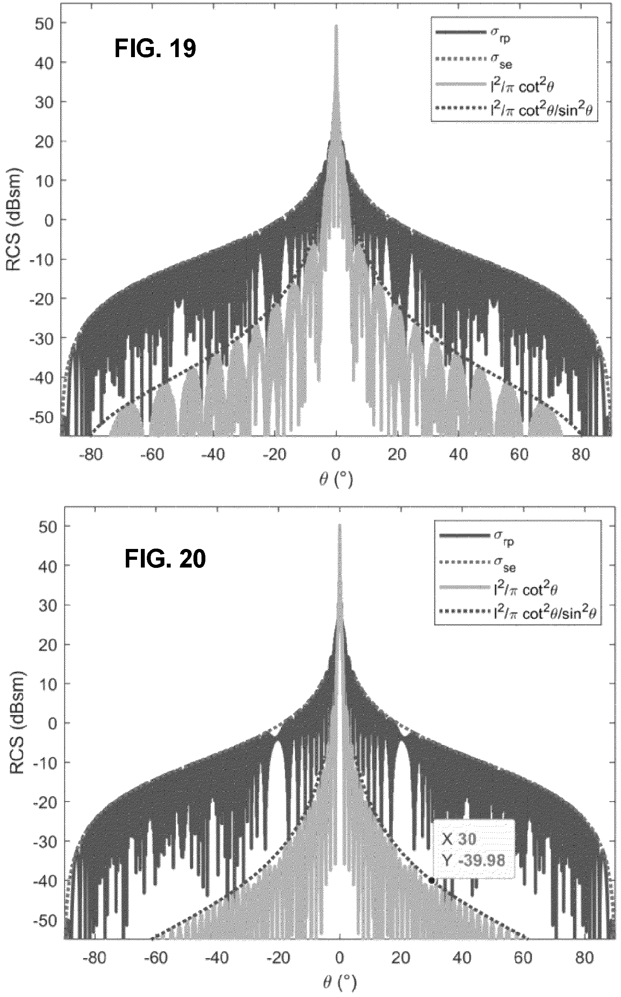

Fig. 19 shows the curves defined by these two expressions, together with the respective asymptotic envelopes, showing how the RCS of the simple shield of Fig. 6 (represented by the darker, upper plot) and the fourth shield of Fig. 10 (represented by the lighter, lower plot) varies with azimuth angle $\theta$ for the upright orientation where $\Phi = 0°$.

By comparing the two expression it becomes apparent that the effect of the edge serration is a reduction of the RCS in the horizontal plane which is described by the factor

$$\mathrm{sinc}(kh\sin\theta)^2 \sim (kh\sin\theta)^{-2}$$

The reduction in RCS is independent of the period p and of the number N of vertex elements, and depends only on the electrical length h of the vertex elements 15'.

For a given azimuth angle $\theta$ of, for example, $\theta = 30°$, the reduction in RCS is

$$20\log_{10} kh\ \sin\theta \approx 24.1\mathrm{dB}$$

which reduces the RCS from $\sigma$rp (0) = - 4.6 dBsm for the simple shield of Fig. 6, to $\sigma$se (0) = - 28.7 dBsm for the fourth shield 410 of Fig. 10.

By way of example, if the required reduction in radar cross section RCS of the shield at $\Phi = 0°$ were determined to be - 40dBsm = 1cm$^2$, the required value of h would be calculated as

$$20\log_{10}(kh\ \sin\theta) = 42 - 4.6 = 37.4\ \mathrm{dB} \implies h = \frac{10^{\frac{37.4}{20}}}{k\ \sin\theta} \approx 7.3\ \mathrm{cm}$$

Referring now to Figs. 16, 17 and 18, although the three plots are different when considered over the whole parameter space, each of the first, second and third shields 110, 210, 310 of Figs. 7 - 9 exhibits the same RCS when considered only in the upright orientation where $\Phi = 0°$.

This can be understood from Fig. 20, which is a plot derived from the same calculations for orp and $\sigma$se as used for Fig. 19, and representing how the RCS changes with azimuth angle $\theta$ when the shield is arranged in the upright orientation where $\Phi = 0°$.

The darker, upper plot represents the RCS of the simple shield of Fig. 6. The lighter, lower plot represents the RCS of each of the first, second and third shields 110, 210, 310 of Figs. 7 - 9 (all having the same vertex element length h but different number N and period P). The respective asymptotic envelopes are shown.

The lighter, lower plot of Fig. 20 indicates that each of the first, second and third shields 110, 210, 310 of Figs. 7 - 9 exhibits an RCS = - 40 dBsm at an azimuth angle $\theta = 30°$.

Comparing the lighter, lower plot of Fig. 20 with the lighter, lower plot of Fig. 19 repesenting the fourth shield 410 (having a different vertex element length h), it can be appreciated that the RCS in the upright orientation where $\Phi = 0°$ is determined by the vertex element length h independently of the number N and period p.

The vertex angle α determines sensitivity to inclination angle Φ

Comparing the three graphs of Figs. 16, 17 and 18, the equal colour or shade of the dark background, and the lighter lines or points in all three graphs, shows that the first shield 110 having a single vertex 15 at each of the front and rear edges 12, 13 delivers the same reduction in RCS as the serrated shields 210, 310 having multiple vertex elements 15' of the same vertex element length h relative to the frequency f of the wave. As long as the shield 110, 210, 310 is oriented to define a value of the azimuth and inclination angles θ, Φ that lies in the dark, background region, the RCS is negligible.

In Figs. 16, 17 and 18 it can be seen that the lighter, oblique spectral lines representing a relatively higher reflected energy diverge from the central point of the graph to form an "X" shape. The included angle between the limbs on opposite sides of the vertical centre line of the graph is equal to the vertex angle α of the respective shield.

In Fig. 18 representing the RCS of the third shield of Fig. 310 having the most numerous, narrow serrations 15', these lines extend for only a short distance along the u axis, to a value not more than about u= +/- 0.1, with additional broken horizontal bands extending at most to around u = +/- 0.7, becoming very faint beyond about u = +/- 0.3.

In Fig. 17 representing the second shield 210 having fewer serrations 15', the "X" shaped lines extend to around u = +/- 0.4, with very faint broken horizontal bands extending to about u = +/- 0.6.

In Fig. 16 representing the first shield 110 having a single vertex 15 at each of the leading and trailing edges 12, 13, the "X" shaped lines extend to about u = +/- 0.95. The horizontal bands visible in the other graphs are not present, but there is a more diffuse region of lighter blue colour (of a value around -20dBsm to -30dBsm) between the limbs of the "X", extending out from the centre point and darkening to the background colour around u = +/- 0.5.

It can be seen that the greater the vertex angle α, the more sensitive is the shield to variations in the inclination angle Φ. That is to say - for any given azimuth angle θ, the greater the vertex angle α, the closer the shield must be to the vertical orientation Φ = 0° in order to avoid the spectral lines indicating higher RCS.

Hence, the more numerous the vertices 15 or serrations 15', for any given azimuth angle θ, the greater is the tolerance of the shield to mislignment away from an intended vertical angle of inclination Φ = 0°.

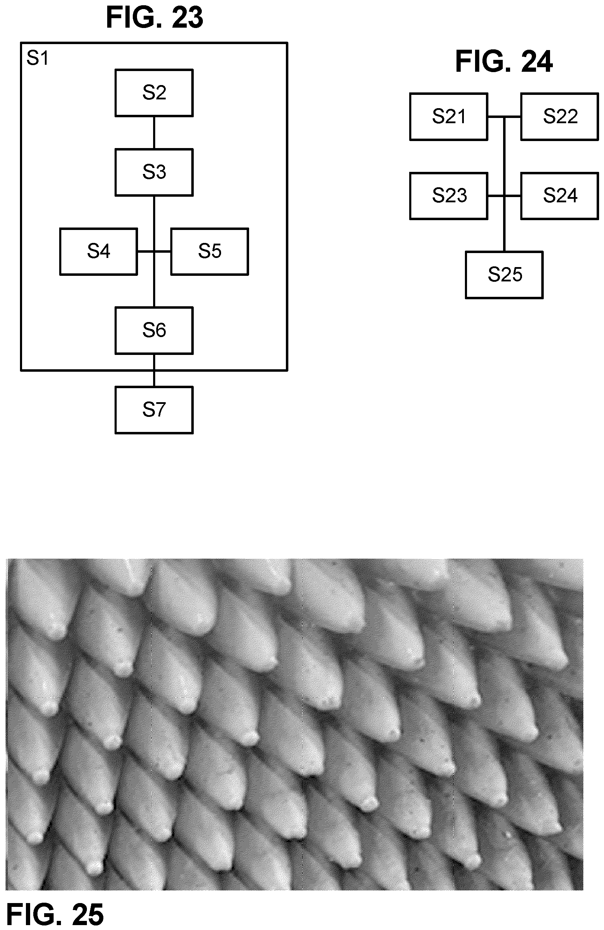

Method for vertical installation where Φ = 0° : selecting N independently of RCS (Fig. 23)

As discussed above, where the novel panel is installed in a vertical orientation, which is to say, with an angle of inclination Φ = 0°, the reduction in RCS compared with the simple shield of equal area A depends only on the azimuth angle θ and the length h of the vertex elements or serrations, and does not change with the number N or period p of the vertex elements.

Consequently, where the novel shield is to be installed in a substantially vertical orientation (for example by fixing it to the obstruction using brackets or other fixings that ensure a substantially vertical orientation), the number N and period p of vertex elements can be selected to provide the most convenient shape for fabrication of the panel. Most simply, the panel can have a single vertex element at each of the near and far edges, as exemplified by the first shield 110 of Fig. 7. This provides a simple shape that is mechanically robust and easy to manufacture.

Accordingly, referring now to Fig. 23, at step S1, a method of shielding an obstruction includes providing a shield 110, 210, 310, 410 wherein each vertex 15 defines a tip of a respective vertex element 15'.

Each of the near and far edges 12, 13 of the shield 110, 210, 310, 410 consists of a number N of vertex elements 15' of equal size and shape, wherein N ≥ 1.

For each respective vertex element 15', the bisector line Lb defines the length h of the vertex element 15' between the respective vertex 15 and base line 18. Each vertex element 15' is mirror-symmetric about the respective bisector line Lb to define a vertex angle α, as discussed above.

Step S1 includes sub-steps S2, S3, S4, S5 as follows, which can be performed in any order as appropriate.

At step S2, the intended azimuth angle θ and angle of inclination Φ are selected, wherein Φ = 0°, which is to say, it is intended to install the shield in a vertical (upright) position.

At step S3, the required radar cross section RCS of the shield at the selected azimuth angle θ and angle of inclination Φ = 0° is selected, based on the area A of the shield. This is done by reference to the acceptable threshold for clutter in the intended installation. So, if the radar installation is more sensitive to clutter, then a smaller RCS is selected; and if the radar installation is less sensitive to clutter, then a more generous RCS can be selected as the required value to be achieved.

At step S4, the vertex element length h is selected which corresponds to the required RCS of the shield at the selected azimuth angle θ and angle of inclination Φ = 0°. This can be done by calculation as set out above.

At step S5, the number N of vertex elements 15' at each of the near and far edges 12, 13 is selected, independently of the required radar cross section RCS.

That is to say, any desired number N of vertex elements 15' can be selected, irrespective of the required RCS of the shield.

Optionally at step S5, for robustness and ease of manufacture, the number N can be selected to be N = 1. That is to say, each of the near and far edges 12, 13 consists of exactly one vertex element 15', as exemplified by the first shield 110 of Fig. 7.

At step S6, the shield is formed (e.g. by cutting from sheet material) with the selected vertex element length h and the selected number N of vertex elements. Mounting hardware can be added, e.g. by spot welding to the rear face of the shield.

At step S7, the shield 110, 210, 310, 410 is arranged between the antenna 3 and the obstruction 2, and oriented at approximately the selected azimuth angle θ and angle of inclination Φ = 0° to reflect the wave travelling along the line of incidence i away from the receiving antenna 3.

In this way, the number N of vertex elements is selected independently of the calculated RCS that is required to avoid clutter in the intended installation.

The shield 110, 210, 310, 410 is then installed at approximately the intended azimuth angle θ and angle of inclination Φ = 0°.

The angle of inclination Φ can be achieved by means of suitable mounting hardware based on the orientation of the obstruction 2 - so, if the obstruction is close to vertical, it will be relatively easy to position the shield in the same upright orientation. For example, the shield may be positioned so that the angle of inclination Φ is within a few degrees of vertical, e.g. within about 5° either side of vertical. The azimuth angle θ can then be adjusted to obtain the required RCS, within a rather larger margin of error. For example, the azimuth angle θ can be defined within about 10° or 20° either side of the selected value.

Where N = 1, there is relatively less room for error in the orientation of the shield in azimuth θ and inclination Φ. By increasing the number N of vertex elements, the shield becomes relatively more tolerant of error in installation before its RCS increases beyond the design point. Whether the shield is close enough to the intended position can be determined by trial and error by using the radar installation to determine whether the actual RCS is below the intended threshold value.

<u>Parameter selection using an optimisation algorithm (Fig. 24)</u>

The parameters of the shield may be selected to be tolerant of suboptimal orientation, i.e. so as to give the best performance over a wide range of angular positions of the shield 110, 210, 310, 410 relative to the line of incidence i. This means that the shield 110, 210, 310, 410 is relatively insensitive to the precise azimuth angle Φ or inclination angle θ at which it is installed. Consequently, the shield can be installed easily by arranging it approximately in the right position, and will continue to shield the obstruction effectively even if it begins to move or distort over time.

Referring now to Fig. 24, the shield 110, 210, 310, 410 may be designed and manufactured as follows, using an optimisation algorithm in accordance with steps S21 to S25.

As illustrated by each of the first, second, third and fourth shields 110, 210, 310, 410, each respective vertex element 15' is mirror-symmetric about the respective bisector line Lb.

The reflective surface 11 has first and second lateral edges 16, 17, the lateral edges 16, 17 extending from the near edge 12 to the far edge 13. Each of the near and far edges 12, 13 has a lateral dimension l between the first and second lateral edges 16, 17.

Each of the near and far edges 12, 13 consists of a whole number N of vertex elements 15', wherein N ≥ 1.

The vertex elements 15' are of equal size and shape.

For each of the near and far edges 12, 13, a period is defined as p=l/N, wherein, if N>1 (as illustrated by the second, third and fourth shields 210, 310, 410), then adjacent ones of the vertex elements are spaced apart by the period p.

For each respective vertex element 15', the bisector line Lb defines the length h of the vertex element 15' between the respective vertex 15 and base line 18.

The method includes the following steps.

Step S21: defining multiple alternative first values for at least the length h and period p of the vertex elements 15'.

Step S22: defining multiple alternative second values for an angle or angles of orientation of the shield relative to the line of incidence i.

The angle or angles of orientation can be defined for example in either or both of the conventional spherical coordinates Φ and θ.

Step S23: calculating, for each of multiple combinations of the alternative first values and alternative second values, an expected shielding effectiveness of the shield.

Step S24: selecting, from those multiple combinations, a respective combination of the first values for which the calculated shielding effectiveness is optimally insensitive to the angle or angles of orientation (e.g. Φ, θ) of the shield 110, 210, 310, 410, relative to the line of incidence i.

Step S25: manufacturing the shield 110, 210, 310, 410 with the selected combination of first values.

Although Fig. 24 illustrates one particular sequence of steps S21 to S25, the steps can be combined in any way and carried out in any order as appropriate to the approach taken.

The multiple alternative first values may include multiple alternative first values for the thickness T which is selected to be one quarter of the wavelength λ or an odd multiple thereof.

The expected shielding effectiveness is a measure of how much of the wave is reflected or diffracted from the shield 110, 210, 310, 410 (or from a representative portion or portions of the shield) back to the receiving antenna 3, and may be expressed as the radar cross section (RCS), also referred to as the radar signature, a conventional measure of the reflectivity of a target as known in the art.

The angle or angles of orientation may be defined in either or both of two orthogonal planes, which is to say, by two spherical coordinates, conveniently by the inclination angle Φ and the azimuth angle θ. Together, the values h and p and the angles Φ and θ give four variables. The multiple alternative first values may include the thickness T of the sheet or plate which thus forms an additional (fifth) variable in the model.

The method may be performed wholly or in part by numerical analysis using any desired optimisation algorithm as known in the art. For example, a Monte Carlo or quasi-Monte Carlo or randomised quasi-Monte Carlo method may be used to generate a large set of value and angle combinations, employing an optimisation algorithm to identify an optimal or near-optimal value combination from the result set, as known in the art. The first and/or second values may be defined within preselected limits.

The selected combination of values for h and p is that for which the calculated shielding effectiveness is optimally insensitive to the angle or angles of orientation of the shield relative to the line of incidence i.

By optimally insensitive is meant that the selected value combination optimizes, together, the calculated shielding effectiveness (so minimising RCS), and the insensitivity of the calculated shielding effectiveness or RCS to the angle or angles of orientation of the shield relative to the line of incidence i.

So, for example, value combinations that deliver relatively high RCS that does not vary with the orientation of the shield are not selected. And value combinations that deliver minimal RCS that increases rapidly with small changes in orientation of the shield, also are not selected. The selected value combination delivers the optimal combination of effectiveness and insensitivity, which is to say, the best effectiveness over the widest possible angular range.

The acceptable range of angular deviation of the shield or panel and the relative weight to be given to shielding effectiveness close to the optimal orientation versus shielding effectiveness near the angular limits of the range can be selected depending on the intended use situation, e.g. by applying appropriate weighting parameters to the respective values as known in the art of numerical analysis.

For example, if several identical panels 20 are to be manufactured for use in a variety of possible positions, a more generous allowance may be made for inaccuracies during installation, and the analysis input parameters may be adjusted to prioritise a relatively large angular range while accepting a relatively lower value for maximum effectiveness when installed in the ideal orientation.

Conversely, if the installation position is well defined, the algorithm may be tuned to deprioritise shielding effectiveness beyond a relatively smaller angular range.

The shield 110, 210, 310, 410 is manufactured with the selected value combination and then may be validated by tests before installation.

Industrial Applicability

The disclosure recognises that a simple reflector 110, 210, 310, 410 with vertices at the near and far edges 12, 13 can be effective to shield an obstruction 2 in the far field of a radar. The reflector or shield can be a thin, flat panel 20 of metal or any other material that is reflective at the frequency of the wave, and can be made and installed more simply and at lower cost than the radiation absorbent three-dimensional structures conventionally used for this purpose.

In tests, embodiments of the novel shield are found to be more effective in suppressing clutter than the conventional, three-dimensionally patterned radiation absorbent panel, while also being easier and cheaper to manufacture, less sensitive to deformation and ageing, less prone to collect debris which can degrade performance, and more tolerant of imperfect installation.

Fig. 25 shows part of a commercially available radiation absorbent shield of conventional design, having an overall size of 60cm x 60cm (so the same area as the fourth shield 410) with a three-dimensional periodic surface structure (facing the line of incidence i) comprising staggered rows of cones with a height of 13mm and a period of 10mm along the row and 17mm between alternate rows.

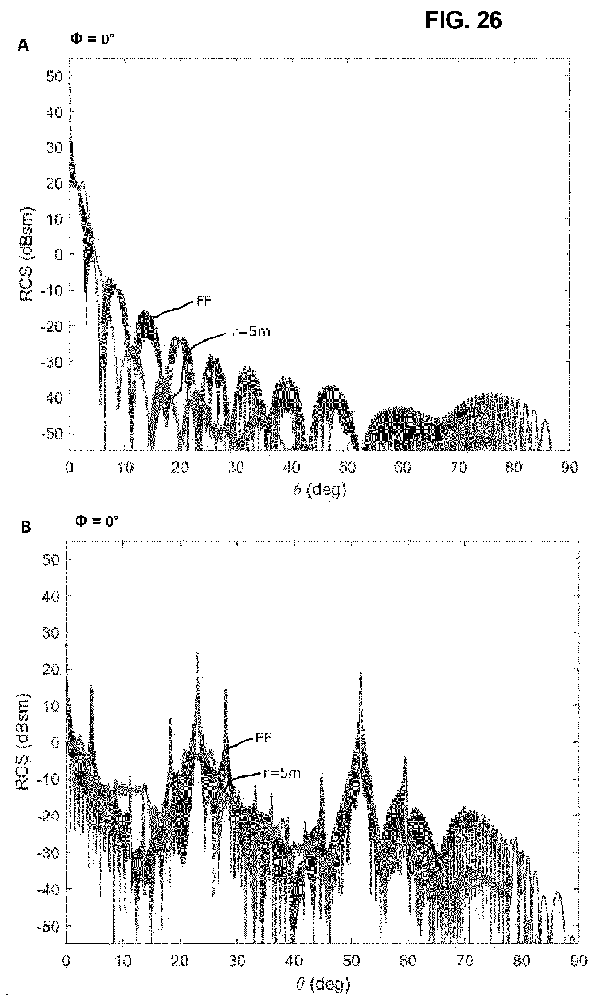

Figs. 26 - 34 show how the fourth shield 410 of Fig. 10 performs, compared with the conventional periodic (three-dimensional) radioabsorbent shield of Fig. 25 and the simple shield of Fig. 6, when oriented at different angles to the line of incidence i.

Each figure shows the calculated radar cross section (RCS) of the shield in decibels per square metre (dBsm) when located in the field of view of a radar with a central frequency of 76.5 GHz and an antenna with a reflector having a maximum dimension Da=100mm. The shield is oriented at an inclination angle Φ and an azimuth angle θ relative to the line of incidence i. The azimuth angle θ represents the angle of the shield about a vertical axis relative to the line of incidence i, while the inclination angle Φ represents the angle of the shield about a horizontal axis relative to the line of incidence i, as defined above.

Each of Figs. 26 - 32 shows, for a respective azimuth angle Φ, two value sets: one, indicated as "FF" in the graph, where the shield is located in the far field of the beam; and one, indicated as "r=5m" in the graph, where the shield is located just inside the Fresnel (outer) region of the near field at a distance r of 5m from the antenna. (The Fraunhofer distance is 2Da (Da/λ) ≈ 5.1m.) Each value set shows how the radar cross section RCS varies with azimuth angle θ at a given inclination angle Φ.

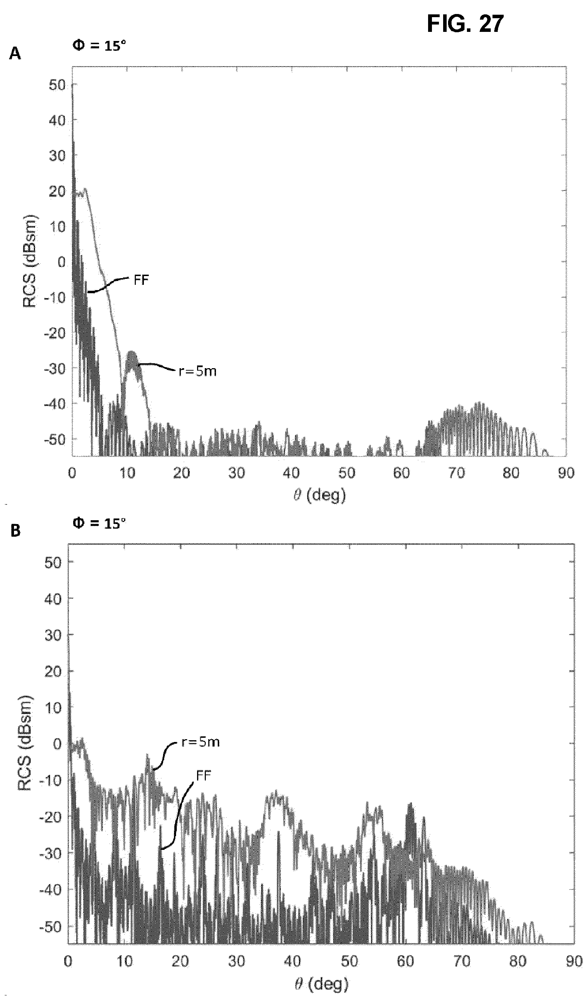

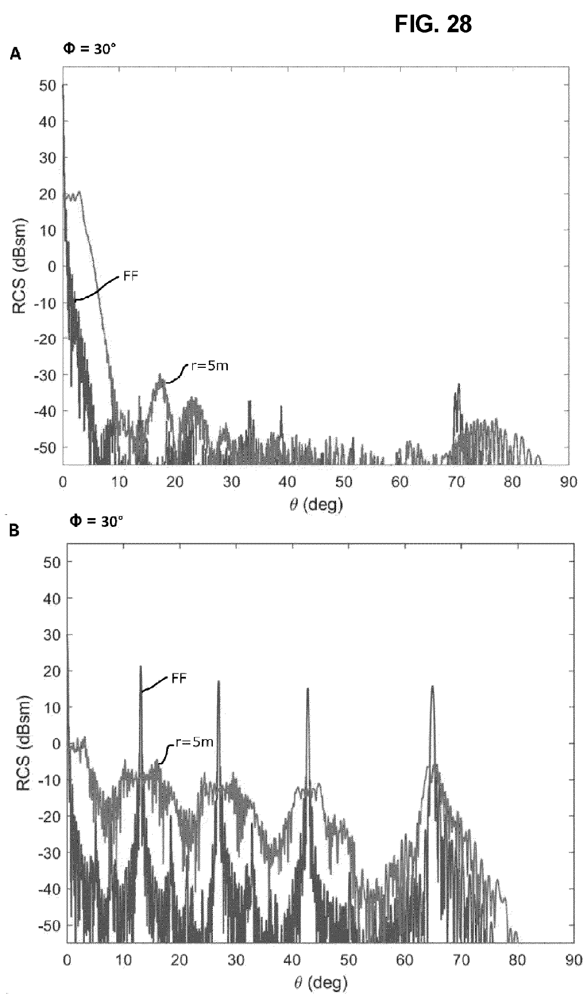

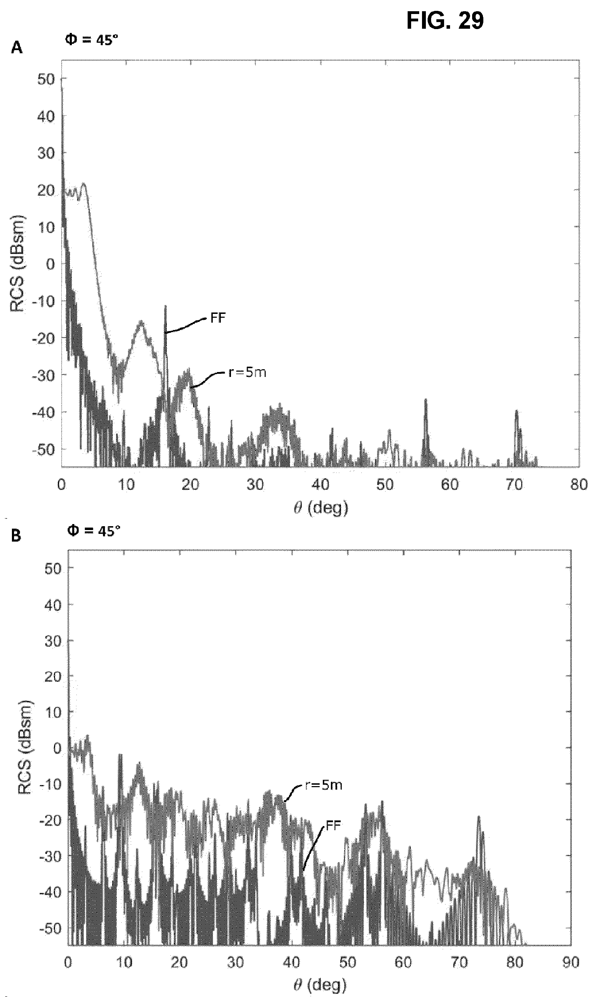

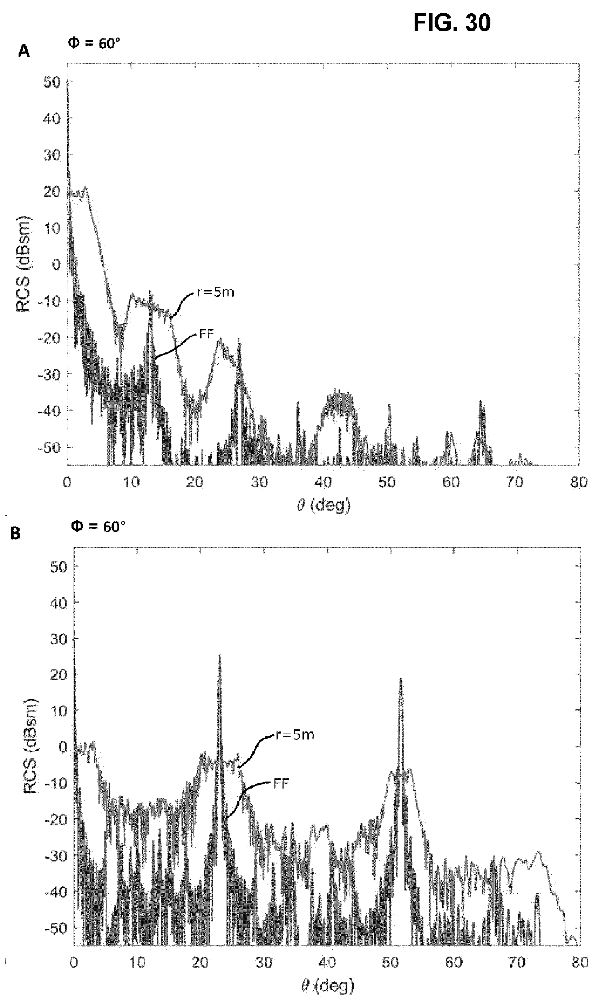

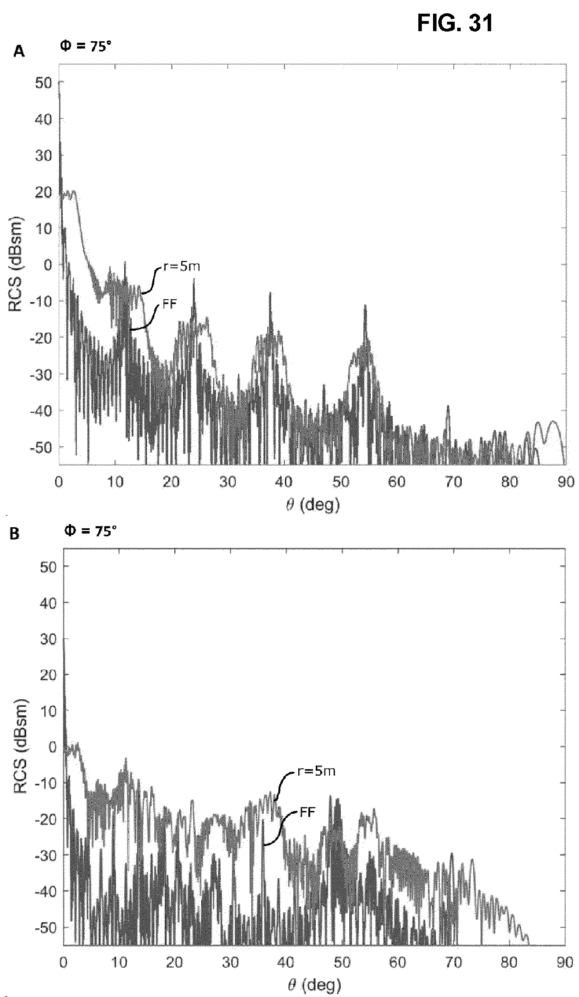

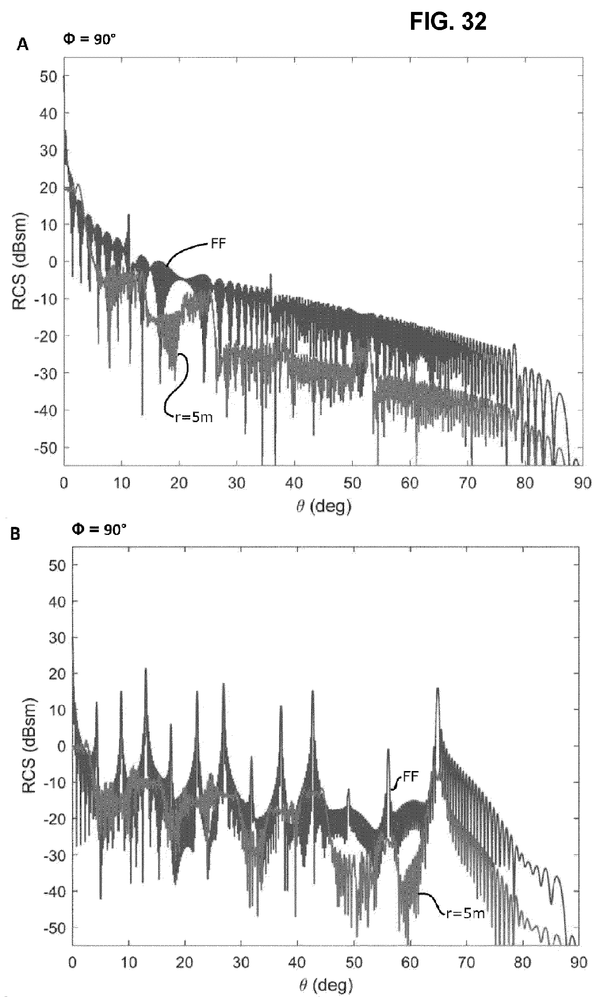

As indicated, the inclination angle Φ is 0° (Fig. 26), 15° (Fig. 27), 30° (Fig. 28), 45° (Fig. 29), 60° (Fig. 30), 75° (Fig. 31), and 90° (Fig. 32), respectively.

For each of Figs. 26 - 32:

Graph A shows the results for the fourth shield 410 of Fig. 10.

Graph B shows the results obtained from the same model for the commercially available periodic shield of Fig. 25.

It can be seen that across the angular range of azimuth (θ) and inclination (Φ) angles, compared with the conventional periodic surface radiation absorbent panel of graph B, the fourth shield 410 of graph A generally exhibits a substantially smaller radar cross section and lower sensitivity to angular orientation relative to the line of incidence i.

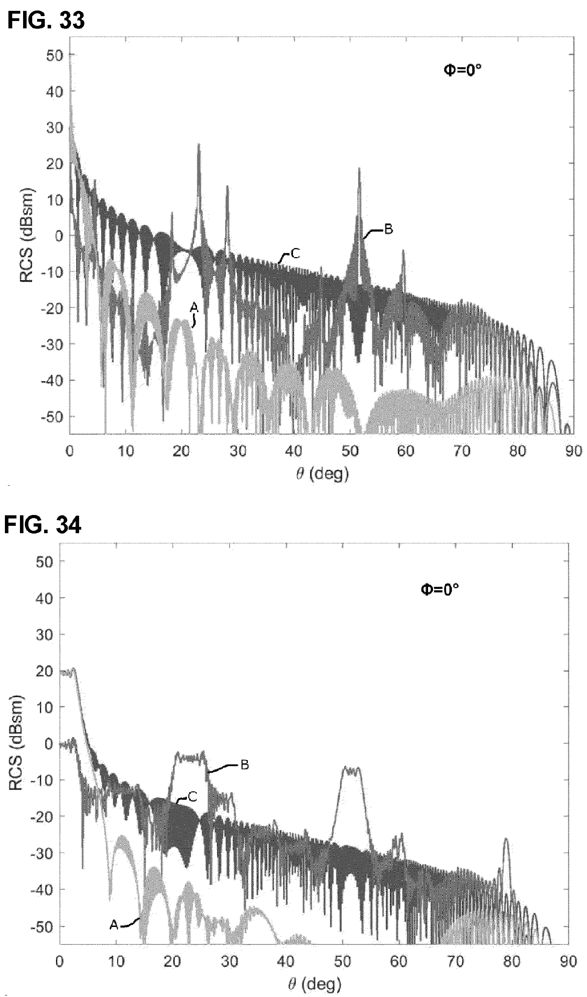

Each of Fig. 33 and Fig. 34 shows three result sets derived in the same way as Figs. 26 - 32, for an upright orientation of the shield (so an inclination angle Φ=0°), wherein:

Result set A is for the fourth shield 410 as in graphs A of Figs. 26 - 32.

Result set B is for the conventional shield of Fig. 25, as in graphs B of Figs. 26 - 32.

Result set C is for the simple shield of Fig. 6.

In Fig. 33 each shield is arranged in the far field of the wave travelling along the line of incidence i (in the position of the first value set "FF" of each of the graphs of Figs. 26 - 32.)

In Fig. 34 each shield is located just inside the Fresnel (outer) region of the near field at a distance r = 5m from the antenna (in the position of the second value set "r=5m" of each of the graphs of Figs. 26 - 32.)

In each of Figs. 33 and 34 result set (A) exhibits by far the smallest RCS of the three result sets across most azimuth angles θ.

Result set (A) lies almost entirely below result set (C). Result set (B) lies partly above and partly below result set (C).

Summary

In summary, a shield 110, 210, 310, 410 is provided with a reflective surface 11 substantially without three-dimensional pattern and oriented to extend away from the radar antenna 3 from a near edge 12 to a far edge 13. Each of the near edge 12 and the far edge 13 includes at least two contiguous, straight portions 14 defining at least one vertex 15 at a point of mutual intersection. The shield is arranged to shield an obstruction 2 in the field of view of the radar and may be used to reduce clutter in a fixed radar installation 1, for example, on a railway level crossing.

Many further adaptations are possible within the scope of the claims.

In the claims, reference numerals and characters are provided in parentheses, purely for ease of reference, and should not be construed as limiting features.

LIST OF TERMS

| 1 | Fixed radar installation |
|---|---|
| 2 | Obstruction |
| 3 | Antenna |
| 3' | Radome |
| 5 | Radar apparatus |
| 6 | Output signal |
| 7 | Reflector |
| 8 | Feed antenna |
| 9 | Circuitry |
| 11 | Reflective surface |
| 12 | Near edge of shield |
| 12' | Rear edge of panel |
| 13 | Far edge of shield |
| 14 | Straight portion |
| 14' | Inner end of straight portion |

| | |
|---|---|
| 15 | Vertex |
| 15' | Vertex element |
| 15" | Inwardly pointing vertex |
| 16 | Upper lateral edge of shield |
| 17 | Lower lateral edge of shield |
| 18 | Base line |
| 20 | Panel (sheet or plate) |
| 21 | Bracket |
| 30 | Level crossing |
| 31 | Barriers |
| 32 | Road |
| 33 | Railway line |
| 110 | First shield |
| 210 | Second shield |
| 310 | Third shield |
| 410 | Fourth shield |
| A | Area of reflective surface |
| Aoe | Lateral edge angle of orientation |
| Aov | Vertex angle of orientation |
| cos | Cosine |
| dBsm | Decibels per square metre |
| Da | Maximum dimension of antenna |
| f | Frequency |
| FF | Far field (value set) |
| G | Ground surface |
| h or $h$ | Length of vertex element |
| i | Line of incidence |
| i, Z | Point of incidence |
| k or $k$ | Free space wavenumber |
| l | Average lateral dimension of shield |
| Lb | Bisector line |
| Lm | Median line |
| LPvi | Vertical incidence plane intersection line |
| LPvz | Normal plane intersection line |
| LPxi | Horizontal incidence plane intersection line |
| LPzi | Z incidence plane intersection line |
| N | Number of vertex elements (near or far edge) |
| p or $p$ | Period of vertex element(s) |
| Ph | Horizontal plane |
| Pr | Reflection plane |
| Pvi | Vertical incidence plane |
| Pvz | Normal plane |
| Pxi | Horizontal incidence plane |
| Pzi | Z incidence plane |
| r | Distance from antenna |
| $\hat{r}$ | Observation direction |
| RCS | Radar cross section |
| sin | Sine |
| t or $t$ | Length of straight portion |
| T | Thickness of panel (sheet or plate) |
| u | $\sin\theta\,\cos\Phi$ (RCS graphs) |
| v | $\sin\theta\,\sin\Phi$ (RCS graphs) |
| V | Vertical axis |
| w | Average width of shield |
| x or X | X axis |
| x1, x2 | Horizontal axes |
| y or Y | Y axis |
| z or Z | Z axis |

α or a     Vertex angle
λ           Wavelength
Φ          Inclination angle
σrp      RCS of simple shield (Fig. 6)
σse      RCS of novel shield (Figs. 7 - 10)
θ          Azimuth angle

**Claims**

1. A shield (110, 210, 310, 410) for use in a use position, in a radar installation (1), to shield an obstruction (2);

   the radar installation (1) including a radar apparatus (5) having at least one antenna (3) with a maximum dimension Da and arranged to emit and receive a wave with a wavelength λ;
   the shield (110, 210, 310, 410) including a reflective surface (11) for reflecting the wave travelling along a line of incidence (i),
   the line of incidence (i) being a straight line along which the wave travels from the antenna (3) to a point of incidence (i,Z) on the reflective surface (11);
   the reflective surface (11) being substantially without three-dimensional pattern and having a near edge (12) and a far edge (13);
   wherein, in the use position, the shield (110, 210, 310, 410) is arranged between the antenna (3) and the obstruction (2), and
   the reflective surface (11) is oriented to extend away from the antenna (3) in a direction of the line of incidence (i), from the near edge (12) to the far edge (13), to reflect the wave travelling along the line of incidence (i) away from the antenna (3);
   wherein each of the near edge (12) and the far edge (13) includes at least two contiguous, straight portions (14) defining at least one vertex (15),
   wherein each straight portion (14) defines a respective said vertex (15) at a point of intersection with an adjacent straight portion (14).

2. A shield (110) according to claim 1, wherein each of the near edge (12) and the far edge (13) consists of exactly one pair of contiguous, straight portions (14) defining a vertex (15) at a point of mutual intersection.

3. A shield (210, 310, 410) according to claim 1, wherein each of the near edge (12) and the far edge (13) is serrated to define a plurality of pairs of contiguous, straight portions (14), each pair of contiguous, straight portions (14) defining a respective vertex (15) at a point of mutual intersection.

4. A shield (110, 210, 310, 410) according to claim 1, wherein the reflective surface (11) is flat.

5. A shield (110, 210, 310, 410) according to claim 4, wherein the reflective surface (11) has first and second lateral edges (16, 17), the lateral edges (16, 17) extending from the near edge (12) to the far edge (13); and
   the lateral edges (16, 17) are straight.

6. A shield (110, 210, 310, 410) according to claim 5, wherein,

   when a reflection plane (Pr) is defined as a plane containing the reflective surface (11); and
   a Z axis is defined as a line perpendicular to the reflective surface (11) at the point of incidence (i,Z); and
   a Z incidence plane (Pzi) is defined as a plane containing the line of incidence (i) and the Z axis; and
   a Z incidence plane intersection line (LPzi) is defined as a line of intersection between the Z incidence plane (Pzi) and the reflection plane (Pr):

      for each of the lateral edges (16, 17), when the point of incidence (i,Z) is defined at the respective lateral edge (16, 17), a lateral edge angle of orientation Aoe is defined in the reflection plane (Pr) between the respective lateral edge (16, 17) and the Z incidence plane intersection line (LPzi);
      wherein Aoe ≤ 5°.

7. A shield (110, 210, 310, 410) according to claim 1, wherein, for each respective vertex (15) of the shield (10):

   when a reflection plane (Pr) is defined as a plane tangent to the reflective surface (11) at the point of incidence (i,Z);

and

the reflection plane (Pr) contains a respective pair of contiguous straight portions (14) defining the respective vertex (15); and

the respective vertex defines the point of incidence (i,Z); and

a Z axis (Z) is defined as a line perpendicular to the reflective surface at the point of incidence (i,Z); and

a Z incidence plane (Pzi) is defined as a plane containing the line of incidence (i) and the Z axis (Z); and

a Z incidence plane intersection line (LPzi) is defined as a line of intersection between the Z incidence plane (Pzi) and the reflection plane (Pr); and

a vertex angle ($\alpha$) is defined in the reflection plane (Pr) between the respective pair of contiguous straight portions (14); and

a bisector line (Lb) is defined as a line bisecting the vertex angle ($\alpha$) in the reflection plane (Pr); and

a vertex angle of orientation Aov is defined in the reflection plane (Pr) between the bisector line (Lb) and the Z incidence plane intersection line (LPzi):

$$Aov \leq 5°.$$

8. A shield (110, 210, 310, 410) according to claim 1, wherein each vertex (15) defines a tip of a respective vertex element (15'), the vertex element (15') defining a portion of the reflective surface (11) and pointing outwardly away from the shield (110, 210, 310, 410); and

the vertex element (15') is bounded by a respective pair of contiguous, straight portions (14) defining the respective vertex (15), and by an imaginary base line (18); and

each of the respective pair of contiguous, straight portions 14 extends from an outer end at the respective vertex (15) to an inner end (14') opposite the outer end; and

the base line (18) is defined as a straight line extending between the respective inner ends (14') of the respective pair of contiguous, straight portions (14);

wherein, for each vertex element (15') of the shield (110, 210, 310, 410):

when the point of incidence (i,Z) is defined at the vertex (15) defining the tip of the respective vertex element (15'); and

a reflection plane (Pr) is defined as a plane tangent to the reflective surface (11) at the point of incidence (i,Z); and

the reflection plane (Pr) contains a respective pair of contiguous straight portions (14) defining the respective vertex element (15'); and

a vertex angle ($\alpha$) is defined in the reflection plane (Pr) between the respective pair of contiguous straight portions (14); and

a bisector line (Lb) is defined as a line bisecting the vertex angle ($\alpha$) in the reflection plane (Pr); and

the bisector line (Lb) defines a length h of the respective vertex element (15') between the respective vertex (15) and base line (18):

$$h \geq 3\lambda.$$

9. A shield (110, 210, 310, 410) according to claim 1, wherein each vertex (15) defines a tip of a respective vertex element (15'), the vertex element (15') defining a portion of the reflective surface (11) and pointing outwardly away from the shield (110, 210, 310, 410); and

the vertex element (15') is bounded by a respective pair of contiguous, straight portions (14) defining the respective vertex (15), and by an imaginary base line (18); and

each of the respective pair of contiguous, straight portions 14 extends from an outer end at the respective vertex (15) to an inner end (14') opposite the outer end; and

the base line (18) is defined as a straight line extending between the respective inner ends (14') of the respective pair of contiguous, straight portions (14);

wherein, for each vertex element (15') of the shield (110, 210, 310, 410):

when the point of incidence (i,Z) is defined at the vertex (15) defining the tip of the respective vertex element (15'); and

a reflection plane (Pr) is defined as a plane tangent to the reflective surface (11) at the point of incidence (i,Z);

and

the reflection plane (Pr) contains a respective pair of contiguous straight portions (14) defining the respective vertex element (15'); and

a vertex angle ($\alpha$) is defined in the reflection plane (Pr) between the respective pair of contiguous straight portions (14); and

a bisector line (Lb) is defined as a line bisecting the vertex angle ($\alpha$) in the reflection plane (Pr):

the respective vertex element (15') is mirror-symmetric about the respective bisector line (Lb).

10. A shield (110, 210, 310, 410) according to claim 1, wherein the reflective surface (11) is a surface of a sheet or plate (20), wherein the sheet or plate (20) has a thickness T, and the thickness T is equal to one quarter of the wavelength $\lambda$ or an odd multiple of one quarter of the wavelength $\lambda$.

11. A radar installation (1) including:

a radar apparatus (5) having at least one antenna (3) with a maximum dimension Da and arranged to emit a wave with a wavelength $\lambda$ along a line of incidence (i), and

a shield (110, 210, 310, 410) according to any of claims 1 - 10;

the shield (110, 210, 310, 410) being arranged between the antenna (3) and an obstruction (2) and oriented to reflect the wave travelling along the line of incidence (i) away from the antenna (3);

wherein the shield (110, 210, 310, 410) is arranged at a distance r from the antenna (3);

wherein either

(i)

$$r \geq (2Da\,(Da/\lambda)), \text{ or}$$

(ii)

$$(Da \geq 25\lambda) \text{ and } (r \geq 1/3\,(2Da\,(Da/\lambda))).$$

12. A method of shielding an obstruction (2) in a radar installation (1),

the radar installation (1) including a radar apparatus (5) having at least one antenna (3) with a maximum dimension Da and arranged to emit a wave with a wavelength $\lambda$ along a line of incidence (i);

the method including:

providing a shield (110, 210, 310, 410) according to claim 1; and

arranging the shield (110, 210, 310, 410) between the antenna (3) and an obstruction (2), and orienting the shield (110, 210, 310, 410) to reflect the wave travelling along the line of incidence (i) away from the antenna (3).

13. A method according to claim 12, wherein:

each vertex (15) defines a tip of a respective vertex element (15'), the vertex element (15') defining a portion of the reflective surface (11) and pointing outwardly away from the shield (110, 210, 310, 410); and

the vertex element (15') is bounded by a respective pair of contiguous, straight portions (14) defining the respective vertex (15), and by an imaginary base line (18); and

each of the respective pair of contiguous, straight portions 14 extends from an outer end at the respective vertex (15) to an inner end (14') opposite the outer end; and

the base line (18) is defined as a straight line extending between the respective inner ends (14') of the respective pair of contiguous, straight portions (14);

wherein, for each vertex element (15') of the shield (110, 210, 310, 410):

when the point of incidence (i,Z) is defined at the vertex (15) defining the tip of the respective vertex element (15'); and

a reflection plane (Pr) is defined as a plane tangent to the reflective surface (11) at the point of incidence (i,Z); and

the reflection plane (Pr) contains a respective pair of contiguous straight portions (14) defining the respective vertex element (15'); and

a vertex angle ($\alpha$) is defined in the reflection plane (Pr) between the respective pair of contiguous straight portions (14); and

a bisector line (Lb) is defined as a line bisecting the vertex angle ($\alpha$) in the reflection plane (Pr):

the respective vertex element (15') is mirror-symmetric about the respective bisector line (Lb);

wherein each of the near and far edges (12, 13) of the shield (110, 210, 310, 410) consists of a number N of vertex elements (15') of equal size and shape, wherein N $\geq$ 1;

wherein, for each respective vertex element (15'), the bisector line (Lb) defines a length (h) of the vertex element (15') between the respective vertex (15) and base line (18);

the method further including:

selecting an azimuth angle $\theta$ of the reflective surface (11) with respect to the line of incidence (i) in a horizontal plane (Ph);

selecting an angle of inclination $\Phi = 0°$ of the reflective surface (11) with respect to the line of incidence (i) in a vertical plane (Pvz), wherein the selected angle of inclination $\Phi = 0°$ when the line of incidence (i) is perpendicular to the reflective surface (11) in the vertical plane (Pvz);

selecting a required radar cross section of the shield (110, 210, 310, 410) at the selected azimuth angle $\theta$ and angle of inclination $\Phi = 0°$;

selecting a vertex element length (h) corresponding to the required radar cross section of the shield at the selected azimuth angle $\theta$ and an angle of inclination $\Phi = 0°$;

selecting the number N independently of the required radar cross section;

forming the shield with the selected vertex element length (h) and the selected number N of vertex elements; and

installing the shield at approximately the selected azimuth angle $\theta$ and angle of inclination $\Phi = 0°$.

14. A method according to claim 12, wherein:

each vertex (15) defines a tip of a respective vertex element (15'), the vertex element (15') defining a portion of the reflective surface (11) and pointing outwardly away from the shield (110, 210, 310, 410); and

the vertex element (15') is bounded by a respective pair of contiguous, straight portions (14) defining the respective vertex (15), and by an imaginary base line (18); and

each of the respective pair of contiguous, straight portions 14 extends from an outer end at the respective vertex (15) to an inner end (14') opposite the outer end; and

the base line (18) is defined as a straight line extending between the respective inner ends (14') of the respective pair of contiguous, straight portions (14);

wherein, for each vertex element (15') of the shield (110, 210, 310, 410):

when the point of incidence (i,Z) is defined at the vertex (15) defining the tip of the respective vertex element (15'); and

a reflection plane (Pr) is defined as a plane tangent to the reflective surface (11) at the point of incidence (i,Z); and

the reflection plane (Pr) contains a respective pair of contiguous straight portions (14) defining the respective vertex element (15'); and

a vertex angle ($\alpha$) is defined in the reflection plane (Pr) between the respective pair of contiguous straight portions (14); and

a bisector line (Lb) is defined as a line bisecting the vertex angle ($\alpha$) in the reflection plane (Pr):

the respective vertex element (15') is mirror-symmetric about the respective bisector line (Lb);

wherein the reflective surface (11) has first and second lateral edges (16, 17), the lateral edges (16, 17) extending from the near edge (12) to the far edge (13),

wherein each of the near and far edges (12, 13) has a lateral dimension l between the first and second lateral edges (16, 17);

wherein each of the near and far edges (12, 13) consists of a whole number N of vertex elements (15'), wherein N $\geq$ 1;

wherein the vertex elements (15') are of equal size and shape;

wherein, for each of the near and far edges (12, 13), a period p=l/N;

wherein, if N>1, then adjacent ones of the vertex elements are spaced apart by the period p;
wherein, for each respective vertex element (15'), the bisector line (Lb) defines a length (h) of the vertex element (15') between the respective vertex (15) and base line (18);
the method further including:

defining multiple alternative first values for at least the length h and period p of the vertex elements (15');
defining multiple alternative second values for an angle or angles of orientation ($\Phi$, $\theta$) of the shield (110, 210, 310, 410) relative to the line of incidence (i);
calculating, for each of multiple combinations of said alternative first values and alternative second values, an expected shielding effectiveness of the shield (110, 210, 310, 410);
selecting, from said multiple combinations, a respective combination of said first values for which the calculated shielding effectiveness is optimally insensitive to the angle or angles of orientation ($\Phi$, $\theta$) of the shield (110, 210, 310, 410) relative to the line of incidence (i); and
manufacturing the shield (110, 210, 310, 410) with the selected combination of first values.

15. A method according to claim 14, wherein the reflective surface (11) is a surface of a sheet or plate (20) having a thickness T, the thickness T being equal to one quarter of the wavelength $\lambda$ or an odd multiple of one quarter of the wavelength $\lambda$, and said multiple alternative first values include multiple alternative first values for the thickness T.

FIG. 1

**FIG. 2**

**FIG. 3**

FIG. 4

FIG. 5

**FIG. 7**

EP 4 668 482 A1

FIG. 8

**FIG. 6**

**FIG. 9**

# FIG. 10

# FIG. 11

**FIG. 12**

EP 4 668 482 A1

FIG. 13

FIG. 14

EP 4 668 482 A1

FIG. 15

FIG. 16

FIG. 17

FIG. 18

EP 4 668 482 A1

FIG. 19

FIG. 20

# FIG. 21

EP 4 668 482 A1

| Φ |
|---|
| 90°<br>Sin Φ = 1<br>Cos Φ = 0 |
| 45°<br>Sin Φ = 0.7<br>Cos Φ = 0.7 |
| 0°<br>Sin Φ = 0<br>Cos Φ = 1 |
| - 45°<br>Sin Φ = - 0.7<br>Cos Φ = 0.7 |
| - 90°<br>Sin Φ = -1<br>Cos Φ = 0 |

| θ | - 90°<br>Sin θ = -1 | - 45°<br>Sin θ = -0.7 | 0°<br>Sin θ = 0 | 45°<br>Sin θ = 0.7 | 90°<br>Sin θ = 1 |
|---|---|---|---|---|---|

# FIG. 22

# FIG. 23

S1

S2

S3

S4 — S5

S6

S7

# FIG. 24

S21 — S22

S23 — S24

S25

# FIG. 25

**FIG. 26**

A

B

**FIG. 27**

A    Φ = 15°

B    Φ = 15°

## FIG. 28

A    Φ = 30°

B    Φ = 30°

**FIG. 29**

**FIG. 30**

**FIG. 31**

**FIG. 32**

**FIG. 33**

**FIG. 34**

# EUROPEAN SEARCH REPORT

Europäisches
Patentamt
European
Patent Office
Office européen
des brevets

**Application Number**

EP 24 42 5036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 112 748 414 A (SHENYANG AIRCRAFT DESIGN & RES INST AVIC) 4 May 2021 (2021-05-04)<br>* paragraph [0001] *<br>* paragraph [0016] *<br>* paragraph [0020] *<br>* pages 1-2 *<br>----- | 1-4, 7-12,15<br>5,6,13, 14 | INV.<br>H01Q1/52<br>H01Q15/14<br>H05K9/00<br>G01S7/41<br>G01S13/06<br>G01S13/931 |
| A | JP 2010 243202 A (MITSUBISHI ELECTRIC CORP) 28 October 2010 (2010-10-28)<br>* paragraph [0015] - paragraph [0041] *<br>* figures 1-10 *<br>----- | 1-15 | |
| A | BOKHART S A ET AL: "SITE SHIELDING OF EARTH-STATION ANTENNAS",<br>IEEE ANTENNAS AND PROPAGATION MAGAZINE,<br>IEEE SERVICE CENTER, PISCATAWAY, NJ, US,<br>vol. 37, no. 1,<br>1 February 1995 (1995-02-01), pages 7-24,<br>XP000489260,<br>ISSN: 1045-9243, DOI: 10.1109/74.370577<br>* the whole document *<br>----- | 1-15 | |
| A | DE 196 12 579 A1 (HONEYWELL AG [DE]) 2 October 1997 (1997-10-02)<br>* abstract *<br>* figures 1-5 *<br>----- | 1-15 | TECHNICAL FIELDS SEARCHED (IPC)<br><br>H01Q<br>H05K<br>G01S |

The present search report has been drawn up for all claims

| Place of search | Date of completion of the search | Examiner |
|---|---|---|
| Munich | 27 November 2024 | Köppe, Maro |

EPO FORM 1503 03.82 (P04C01)

## ANNEX TO THE EUROPEAN SEARCH REPORT
## ON EUROPEAN PATENT APPLICATION NO.

EP 24 42 5036

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| CN 112748414 | A | 04-05-2021 | NONE | | |
| JP 2010243202 | A | 28-10-2010 | JP 5534698 B2 | | 02-07-2014 |
| | | | JP 2010243202 A | | 28-10-2010 |
| DE 19612579 | A1 | 02-10-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6943286 B1
- CN 218228193 U

- US 6339393 B1

**Non-patent literature cited in the description**

- **TEH-HONG LEE** ; **WALTER D. BURNSIDE**. Performance Trade-off Between Serrated Edge and Blended Rolled Edge Compact Range Reflectors. *IEEE TRANSACTIONS ON ANTENNAS AND PROPAGATION*, January 1996, vol. 44 (1)